# EUROPEAN PATENT APPLICATION

(11) **EP 3 553 612 A1**
(43) Date of publication of application: **16.10.2019**
(21) Application number: 19169013.0
(22) Date of filing: 12.04.2019
(51) Int. Cl.: G05B 19/418, G07C 3/14

(54) **SAMPLE SIZE DETERMINATION IN SAMPLING SYSTEMS**

(30) Priority: 13.04.2018 US 201815921810
(71) Applicant: Johnson & Johnson Vision Care, Inc., Jacksonville, FL 32256 (US)
(72) Inventor: NEWMAN, Richard, Jacksonville, FL Florida 32256 (US); JACOBI, Brian, Jacksonville, FL Florida 32256 (US)
(74) Representative: Carpmaels & Ransford LLP

(57) **Abstract**

Methods and systems for determining a sample size in a sampling plan are described. A device may receive a selection indicating a type of sampling plan. The device may retrieve interface data associated with the selected type of sampling plan. The interface data, when rendered by the device, may be outputted as a user interface. The device may output the user interface on a display of the device. The user interface may include one or more options associated with the selected type of sampling plan. The device may receive a set of input values of the one or more options through the user interface. The device may determine sample size data based on the set of input values. The sample size data may indicate an optimal number of samples to be used in the selected sampling plan.

## Description

The present application relates generally to computers, and computer applications, and more particularly to computer-implemented methods and systems in sampling systems.

### BACKGROUND

In example sampling systems, a number of elements may be selected from a population of elements for sampling purposes. The number of selected elements may affect an expectation in a performance of the population of elements.

### SUMMARY

In some examples, methods for determining a sample size in a sampling plan are generally described. The methods may include receiving, by a device, a selection indicating a type of sampling plan. The methods may further include sending, by a processor of the device, the selection to an interface module of the device. The methods may further include sending, by a processor of the device, the selection to a sampling module of the device. The methods may further include retrieving, by the interface module, interface data associated with the selected type of sampling plan. The interface data, when rendered by the device, may be outputted as a user interface. The methods may further include outputting, by the interface module, the user interface on a display of the device. The user interface may include one or more options associated with the selected type of sampling plan. The methods may further include receiving, by the device, a set of input values of the one or more options through the user interface. The methods may further include determining, by the sampling module, sample size data based on the set of input values. The sample size data may indicate an optimal number of samples to be used in the selected sampling plan.

In some examples, systems effective to determine a sample size for a sampling system are generally described. The systems may include a memory, and a processor configured to be in communication with the memory. The systems may further include an interface module configured to be in communication with the memory and the processor. The systems may further include a sampling module configured to be in communication with the memory and the processor. The memory may be configured to store a set of interface data, where each interface data may be associated with a type of sampling plan. The interface data, when rendered by the system, may be outputted as a user interface. The processor may be configured to receive a selection indicating a type of sampling plan. The processor may be further configured to send the selection to the interface module. The processor may be further configured to send the selection to the sampling module. The interface module may be configured to retrieve interface data associated with the selected type of sampling plan. The interface module may be further configured to output the user interface on a display, where the user interface may include one or more options associated with the selected type of sampling plan. The processor may be further configured to receive a set of input values of the one or more options through the user interface. The sampling module may be configured to determine sample size data based on the set of input values. The sample size data may indicate an optimal number of samples to use in the selected sampling plan.

In some examples, computer program products for determining a sample size for a sampling system are generally described. The computer program product may include a computer readable storage medium having program instructions embodied therewith. The program instructions may be executable by a device to cause the device to receive a selection indicating a type of sampling plan. The program instructions may be further executable by a device to cause the device to retrieve interface data associated with the selected type of sampling plan. The interface data, when rendered by the device, may be outputted as a user interface. The program instructions may be further executable by a device to cause the device to output the user interface on a display of the device. The user interface may include one or more options associated with the selected type of sampling plan. The program instructions may be further executable by a device to cause the device to receive a set of input values of the one or more options through the user interface. The program instructions may be further executable by a device to cause the device to determine sample size data based on the set of input values. The sample size data may indicate an optimal number of samples to be used in the selected sampling plan.

### BRIEF DESCRIPTION OF THE DRAWINGS

Fig. 1 illustrates an example computer system that can be utilized to implement sample size determination in sampling systems.
Fig. 2 illustrates a flow diagram for an example process to implement sample size determination in sampling systems.
Fig. 3 illustrates a flow diagram for an example process to implement sample size determination in sampling systems.
Fig. 4A illustrates a state diagram for an example embodiment related to sample size determination in sampling systems.
Fig. 4B illustrates a design diagram for an example embodiment related to sample size determination in sampling systems.
Fig. 5A illustrates a state diagram for an example embodiment related to sample size determination in sampling systems.
Fig. 5B illustrates a design diagram for an example embodiment related to sample size determination in sampling systems.
Fig. 6A illustrates a state diagram for an example embodiment related to sample size determination in sampling systems.
Fig. 6B illustrates a design diagram for an example embodiment related to sample size determination in sampling systems.
Fig. 7A illustrates a state diagram for an example embodiment related to sample size determination in sampling systems.
Fig. 7B illustrates a design diagram for an example embodiment related to sample size determination in sampling systems.
Fig. 8A illustrates the example system of Fig. 1 with additional details relating to sample size determination in sampling systems.
Fig. 8B illustrates an example output of an implementation of the example system of Fig. 1 relating to sample size determination in sampling systems.
Fig. 8C illustrates an example output of an implementation of the example system of Fig. 1 relating to sample size determination in sampling systems.
Fig. 8D illustrates an example output of an implementation of the example system of Fig. 1 relating to sample size determination in sampling systems.
Fig. 8E illustrates an example output of an implementation of the example system of Fig. 1 relating to sample size determination in sampling systems.
Fig. 9A illustrates the example system of Fig. 1 with additional details relating to sample size determination in sampling systems.
Fig. 9B illustrates a state diagram for an example embodiment related to sample size determination in sampling systems.
Fig. 9C illustrates an example output of an implementation of the example system of Fig. 1 relating to sample size determination in sampling systems.
Fig. 10A illustrates a state diagram for an example embodiment related to sample size determination in sampling systems.
Fig. 10B illustrates an example output of an implementation of the example system of Fig. 1 relating to sample size determination in sampling systems.
Fig. 11A illustrates the example system of Fig. 1 with additional details relating to sample size determination in sampling systems.
Fig. 11B illustrates an example output of an implementation of the example system of Fig. 1 relating to sample size determination in sampling systems.
Fig. 11C illustrates an example output of an implementation of the example system of Fig. 1 relating to sample size determination in sampling systems.
Fig. 11D illustrates an example output of an implementation of the example system of Fig. 1 relating to sample size determination in sampling systems.
Fig. 11E illustrates an example output of an implementation of the example system of Fig. 1 relating to sample size determination in sampling systems.
Fig. 12A illustrates the example system of Fig. 1 with additional details relating to sample size determination in sampling systems.
Fig. 12B illustrates an example output of an implementation of the example system of Fig. 1 relating to sample size determination in sampling systems.
Fig. 12C illustrates an example output of an implementation of the example system of Fig. 1 relating to sample size determination in sampling systems.
Fig. 12D illustrates an example output of an implementation of the example system of Fig. 1 relating to sample size determination in sampling systems.
Fig. 12E illustrates an example output of an implementation of the example system of Fig. 1 relating to sample size determination in sampling systems.
Fig. 13A illustrates the example system of Fig. 1 with additional details relating to sample size determination in sampling systems.
Fig. 13B illustrates an example output of an implementation of the example system of Fig. 1 relating to sample size determination in sampling systems.
Fig. 13C illustrates an example output of an implementation of the example system of Fig. 1 relating to sample size determination in sampling systems.
Fig. 14A illustrates the example system of Fig. 1 with additional details relating to sample size determination in sampling systems.
Fig. 14B illustrates an example output of an implementation of the example system of Fig. 1 relating to sample size determination in sampling systems.
Fig. 14C illustrates an example output of an implementation of the example system of Fig. 1 relating to sample size determination in sampling systems.
Fig. 15 is an exemplary block diagram of a computer system in which processes involved in the system, method, and computer program product described herein may be implemented.

### DETAILED DESCRIPTION

In some examples, users of sampling systems may desire to determine an appropriate sample size for acceptance sampling (e.g., test a number of units out of a population of units to determine whether the untested units are acceptable), for comparison of two groups of objects, or for reliability (e.g., demonstrating that the probability of success is at a level), etc. In order to determine the sample size, the users may rely on assistance from another entity, such as a statistician, or another reference (e.g., another user, information, web page, books, etc.). The accuracy of the determined sample size may be arbitrary, and it may be difficult to determine whether the determined sample size is accurate or appropriate for a desired implementation. Further, in some examples, documenting the determined sample size may be difficult as merely displaying a sample size may provide insufficient information to users who may need to use the determined sample size to make a decision. The manual determination of the appropriated sample size, along with manual documentation of the determined sample size in a clear manner, may be cumbersome.

Briefly stated, methods and systems for determining a sample size in a sampling plan are described. A device may receive a selection indicating a type of sampling plan. The device may retrieve interface data associated with the selected type of sampling plan. The interface data, when rendered by the device, may be outputted as a user interface. The device may output the user interface on a display of the device. The user interface may include one or more options associated with the selected type of sampling plan. The device may receive a set of input values of the one or more options through the user interface. The device may determine sample size data based on the set of input values. The sample size data may indicate an optimal number of samples to be used in the selected sampling plan.

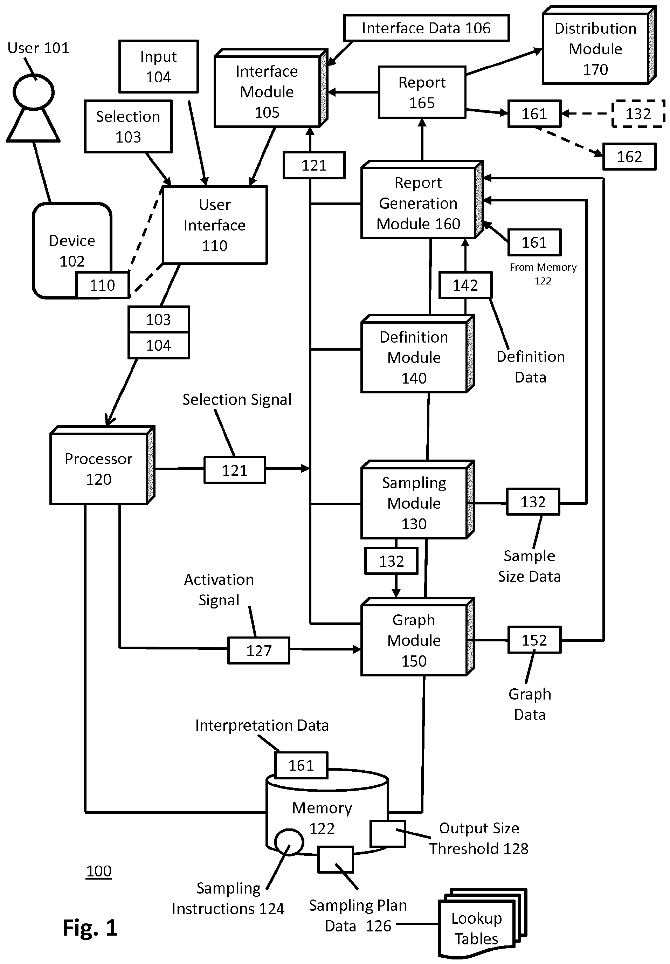

Fig. 1 illustrates an example computer system 100 that can be utilized to implement sample size determination in sampling systems, arranged in accordance with at least some embodiments described herein. In some examples, system 100 may be a computer system, and may include a processor 120, a memory 122, an interface module 105, a sampling module 130, a definition module 140, a graph module 150, a report generation module 160, and/or a distribution module 170. Processor 120, memory 122, interface module 105, sampling module 130, definition module 140, graph module 150, report generation module 160, and distribution module 170 may be configured to be in communication with each other. In some examples, Processor 120, memory 122, interface module 105, sampling module 130, definition module 140, graph module 150, report generation module 160, and distribution module 170 may be housed, or distributed, in a same housing and/or a computer device. In some examples, Processor 120, memory 122, interface module 105, sampling module 130, definition module 140, graph module 150, report generation module 160, and distribution module 170 may be housed, or distributed, in two or more different housings and/or computer devices. For example, processor 120 and memory 122 may be distributed in a first device and interface module 105, sampling module 130, definition module 140, graph module 150, report generation module 160, and distribution module 170 may be distributed in a second device different from the first device. System 100 may be implemented as a system within a device such as a mobile device including cellular phones, tablet computers, laptop computers, wearable devices, etc.

In another embodiment, processor 120, memory 122, interface module 105, sampling module 130, definition module 140, graph module 150, report generation module 160, and distribution module 170 may each be hardware components or hardware modules of system 100. In some examples, interface module 105, sampling module 130, definition module 140, graph module 150, report generation module 160, and distribution module 170 may each be a hardware component, or hardware modules, of processor 120. In some examples, processor 120 may be a central processing unit of a computer device. In some examples, processor 120 may control operations of interface module 105, sampling module 130, definition module 140, graph module 150, report generation module 160, and distribution module 170. In some examples, each interface module 105, sampling module 130, definition module 140, graph module 150, report generation module 160, and distribution module 170 may each include electronic components, such as integrated circuits. In some examples, processor 120 may be configured to run an operating system that includes instructions to manage interface module 105, sampling module 130, definition module 140, graph module 150, report generation module 160, distribution module 170, and memory 122. In some examples, interface module 105, sampling module 130, definition module 140, graph module 150, report generation module 160, and distribution module 170 may be software modules packaged as an application (e.g., mobile device application), and may be implemented with processor 120. In some examples, an availability of system 100 may be restricted within a network.

Memory 122 may be configured to store a sampling instruction 124. Sampling instruction 124 may include one or more set of instructions to facilitate implementation of system 100. In some examples, sampling instruction 124 may include instructions executable by an operating system running on processor 120. For example, sampling instruction 124 may include logic instructions for processor 120, and/or other modules among system 100, to execute particular operations in response to particular inputs and/or outputs. In some examples, memory 122 may be a memory of a user device such as a cellular phone.

In an example, system 100 may be associated with an application (e.g., mobile device application) that may be activated on a device 102 (e.g., a mobile device). Upon an activation of system 100, interface module 105 may output a start page of user interface 110 on a display of the device 102. The start page of user interface 110 may include one or more options for a user 101 of device 102 to select a type of sampling plan or sampling plans. For example, user 101 may select a sampling plan from a group including variable acceptance sampling plan, binary acceptance sampling plan, two-group comparison sampling plan, and reliability sampling plan. User 101 may generate selection 103 to select a sampling plan, such as by using a touchscreen, buttons, voice command via a microphone, or other control inputs, of device 102. Although a group of four types of sampling plans are being used in examples in the present disclosure, additional types of sampling plans may be added to the group, or a number of types of sampling plans may be removed from the group, or some of the sampling plans within the group may be replaced by new types of sampling plans, etc.

Processor 120 may receive selection 103, which may indicate a selected type of sampling plan, through user interface 110 and interface module 105. Processor 120 may send selection 103 to interface module 105, sampling module 130, definition module 140, and report generation module 160. Processor 120 may analyze selection 103 in order to determine whether to activate graph module 150. As will be described in more detail below, particular sampling plans may not require graph module 150 to generate graphs and thus, processor 120 may not activate graph module and may not send selection 103 to graph module 150. In examples where selection 103 indicates a type of sampling plan that requires a graph, processor 120 may generate an activation signal 127 and may send activation signal 127 to graph module 150 to activate graph module 150. Processor 120 may further send selection 103 to graph module 150 if graph module 150 is activated.

In response to receiving selection 103, definition module 140 may retrieve definition data 142 associated with the selected type of sampling plan from memory 122. Memory 122 may store one or more sets of definition data, where each set of definition data may correspond to a type of sampling plan. Each definition data may include definitions of a set of variables and/or textual terms associated with the selected type of sampling plan. Definition module 140 may send the retrieved definition data 142 to report generation module 160.

In response to receiving selection 103, interface module 105 may retrieve interface data 106 associated with the selected type of sampling plan from memory 122. Memory 122 may store one or more sets of interface data, where each interface data may be associated with a set of pages for a type of sampling plan. Each interface data may be rendered by device 102, or interface module 105, to output respective set of pages. Interface module 105 may output the pages that may be rendered by the retrieved interface data 106 on the display of device 102, where the outputted pages may include one or more options, such as a selection of input values of one or more variables, associated with the selected type of sampling plan.

User 101 may view the options displayed on user interface 110 and may generate input 104, such as by using a touchscreen, buttons, voice command via a microphone, or other control inputs, of device 102. Input 104 may include values selected by user 101, where the selected values may be values of one or more variables associated with the selected sampling plan. Processor 120 may send the received input 104 to sampling module 130. Processor 120 may also send input 104 to graph module 150 if graph module is activated.

Sampling module 130 may determine sample size data 132 based on input 104, where sample size data 132 may indicate an optimal number of samples that may be used in the selected sampling plan. Determination of sample size data 132 may be based on a set of sampling plan data 126 stored in memory 122. Sampling plan data 126 may include one or more databases associated with each sampling plan. In an example, sampling plan data 126 may include one or more lookup tables for each sampling plan such that sampling module 130 may perform lookup operations based on input 104 to identify sample size data 132 among the lookup tables. Depending on the selected sampling plan, sample size data 132 may further include other values associated with the selected sampling plan (further described below). Sampling module 130 may send the determined sample size data 132 to report generation module 160.

If graph module 150 is activated, sampling module 130 may send sample size data 132 to graph module 150. Graph module 150 may generate graph data 152, where graph data 152 may be rendered, such as by interface module 105, to output a graph. Graph data 152 may output a graph associated with the selected sampling plan, where values among the graph may be based on sample size data 132 and sampling plan data 126 stored in memory 122.

Memory 122 may store a set of interpretation data, where each interpretation data may be associated with a type of sampling plan, and may each include a static portion and an adjustable portion. In response to receiving selection 103 from processor 120, report generation module 160 may retrieve interpretation data 161 from memory 122. Report generation module 160 may receive sample size data 132 from sampling module 130 and, in response, may populate the adjustable portion of interpretation data 161 with sample size data 132 to generate adjusted interpretation data 162. Report generation module 160 may combine adjusted interpretation data 162 with definition data 142 to generate data associated with a report 165.

In some examples, memory 122 may store an output size threshold 128, where output size threshold 128 may define a set of boundaries to confine report 165 to a particular size. For example, output size threshold 128 may indicate that report 165 shall be confined to a paper of a particular size. Report generation module 160 may modify definition data 142 and/or adjusted interpretation data 162, such as by modifying text sizes, indentations, spacing, etc., of definition data 142 and adjusted interpretation data 162, in order to confine report 165 within boundaries defined by output size threshold 128.

Report generation module 160 may send the data associated with report 165 to interface module 105. Interface module 105 may render the received data associated with report 165 in order to output report 165 on user interface 110. Report 165, when outputted on a display, may include definition data 142, adjusted interpretation data 162, and/or graph data 152 confined within a set of boundaries defined by output size threshold 128.

User 101 may select various options presented by user interface 110 to view individual pieces of data generated by respective modules. For example, user 101 may input a selection to request viewing definitions of variables associated with the selected sampling plan on user interface 110. Device 102 may receive the request through user interface 110 and, in response, may instruct definition module 140 to send definition data 142 to interface module 105. Interface module 105 may render definition data 142 to output definitions of a set of variables associated with the selected sampling plan. Output of the definitions may be bounded within the set of boundaries defined by output size threshold 128. In some examples, a value of output size threshold 128 may be selected by user 101, or may be defined by an administrator of system 100.

In another example, user 101 may input a selection to request viewing an interpretation of the sample size determined by sampling module, in accordance with the selected sampling plan, via user interface 110. An interpretation of a sample size according to a sampling plan may be, for example, a meaning of the sample size within a context of the sampling plan. Device 102 may receive the request through user interface 110 and, in response, may instruct report generation module 160 to send adjusted interpretation data 162 to interface module 105. Interface module 105 may render adjusted interpretation data 162 to output an interpretation of the determined sample size in accordance with the selected sampling plan. Output of the interpretation may be bounded within the set of boundaries defined by output size threshold 128.

In another example, user 101 may input a selection to request viewing a graph in accordance with the selected sampling plan and the determined sample size on user interface 110. Device 102 may receive the request through user interface 110 and, in response, may instruct graph module 150 to send graph data 152 to interface module 105. Interface module 105 may render graph data 152 to output a graph in accordance with the determined sample size and the selected sampling plan. Output of the graph may be bounded within the set of boundaries defined by output size threshold 128.

In another example, user 101 may input a selection to request sharing report 165 with one or more devices different from device 102. Device 102 may receive the sharing request through user interface 110 and, in response, may instruct report generation module 160 to send data associated with report 165 to distribution module 170, and may instruct interface module 105 to output one or more distribution options on user interface 110. Some examples of distribution options may include, but are not limited to, for example, email, text message, share with another user via a social media application installed on device 102, etc. User 101 may select one of the outputted distribution options and may use device 102 to make selection of distribution option. The selection of distribution option may be sent to distribution module 170. Distribution module 170 may identify a communication module (not shown) of device 102 based on the received selection of distribution option. For example, if user 101 selected a distribution option to email report 165, distribution module 170 may identify a module associated with an email client installed in device 102 to facilitate distributing report 165 with use of email. Device 102 may distribute report 165 to one or more devices with use of the identified communication module.

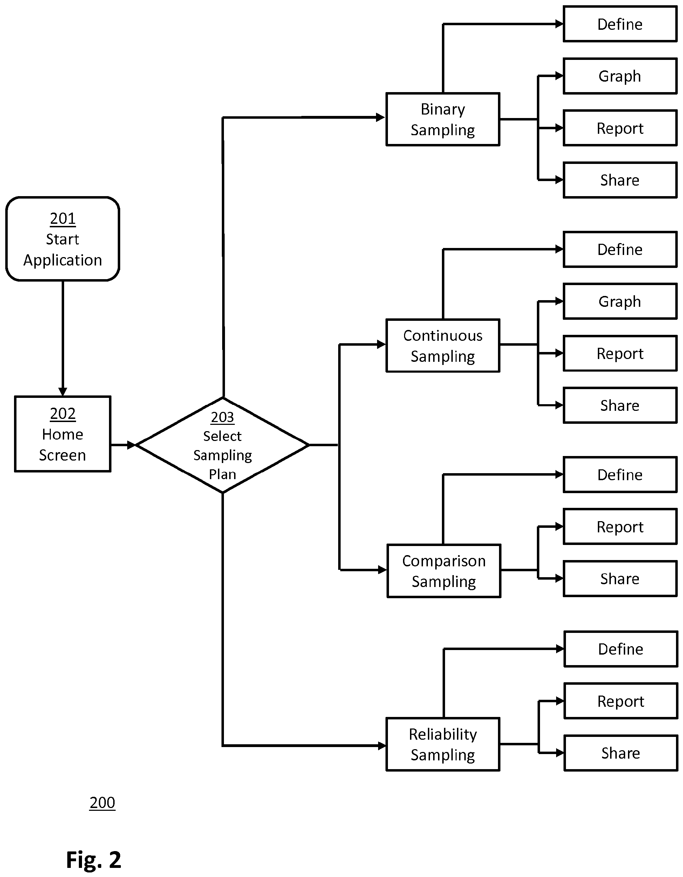

Fig. 2 illustrates a flow diagram for an example process to implement sample size determination in sampling systems, arranged in accordance with at least some embodiments described herein. The process in Fig. 2 could be implemented using, for example, computer system 100 discussed above. An example process may include one or more operations, actions, or functions as illustrated by one or more of blocks 201, 202, and/or 203, etc. Although illustrated as discrete blocks, various blocks may be divided into additional blocks, combined into fewer blocks, or eliminated, depending on the desired implementation.

The flow diagram shown in Fig. 2 may represent a process executed by an implementation of an application 200 by a device (e.g., device 102 described above) in accordance with the present disclosure. The process may begin at block 201, where the device may start the application, such as by having a user of the device (e.g., user 101 described above) select the application from a plurality of applications included in the device.

Upon a start of application 200, at block 202, application 200 may output a home screen that may include one or more options of sampling plans. In an example, the home screen may display the options of binary sampling, continuous sampling, comparison sampling, and reliability sampling. Although four types of sampling plans are being used in the example shown in Fig. 2, it will be apparent to a person of ordinary skill in the art that additional types of sampling plans may be added to the group, or a number of types of sampling plans may be removed from the group, or some of the sampling plans within the group may be replaced by new types of sampling plans, etc.

At block 203, a user of the device may select one of the displayed sampling plans. Selection of a sampling plan may affect a number of modules among the device to be activated, and may affect the types of data to be outputted by the device. If binary sampling or continuous sampling is selected, the device may activate modules to define variables of the selected sampling plan, to generate a graph associated with the selected sampling plan, to generate a report associated with the selected plan, and to share the generate report. If comparison sampling or reliability sampling is selected, the device may activate modules to define variables of the selected sampling plan, to generate a report associated with the selected plan, and to share the generate report, and may not activate a module to generate a graph.

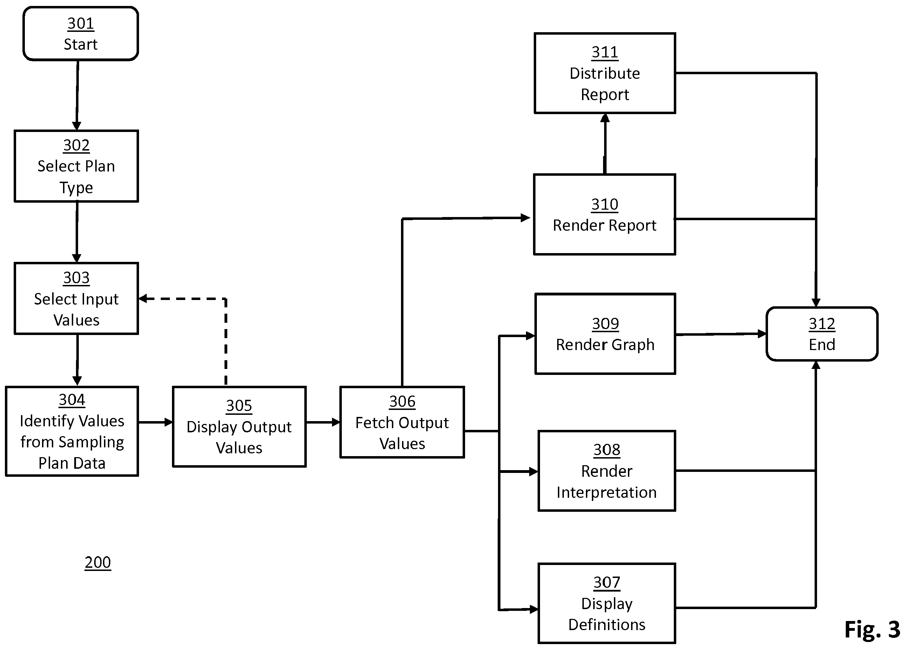

Fig. 3 illustrates a flow diagram for an example process to implement sample size determination in sampling systems, arranged in accordance with at least some embodiments described herein. The process in Fig. 3 could be implemented using, for example, computer system 100 discussed above. An example process may include one or more operations, actions, or functions as illustrated by one or more of blocks 301, 302, 303, 304, 305, 306, 307, 308, 309, 310, 311, and/or 312, etc. Although illustrated as discrete blocks, various blocks may be divided into additional blocks, combined into fewer blocks, or eliminated, depending on the desired implementation.

The flow diagram shown in Fig. 3 may represent a process executed by an implementation of an application (e.g., application 200 described above) by a device (e.g., device 102 described above) in accordance with the present disclosure. The process may begin at block 301, where the device may start the application, such as by having a user of the device (e.g., user 101 described above) select the application from a plurality of applications included in the device.

Upon a start of application 200, at block 302, application 200 may output a home screen that may include one or more options of sampling plans. In an example, the home screen may display the options of binary sampling, continuous sampling, comparison sampling, and reliability sampling. Although four types of sampling plans are being used in the example shown in Fig. 2, it will be apparent to a person of ordinary skill in the art that additional types of sampling plans may be added to the group, or a number of types of sampling plans may be removed from the group, or some of the sampling plans within the group may be replaced by new types of sampling plans, etc.

Each sampling plan may be associated with a different set of variables, such that the device may output a respective set of input values upon receipt of a selection of a sampling plan. At block 303, a user of the device may select a set of input values associated with the selected sampling plan.

Upon selection of input values at block 303, at block 304, the device may identify, based on the selected input values, output values from sampling plan data stored in a memory. The sampling plan data may include one or more lookup tables and/or algorithms that may be used by the device to identify the output values based on the selected input values.

At block 305, the device may display the identified output values. The process may return to block 303 if the user would like to select different input values. As the user selects new input values, the device may execute block 304 to identify new output values based on the new input values, such that at block 305, the newly identified output values may be displayed.

At block 306, when the user stopped changing the selection of the input values, the user may request the device to fetch the identified output values from the memory by selecting an option to process the identified output values.

In an example, the user may request the device to display definitions of variables associated with the selected sampling plan. At block 307, the device may respond to the request of the user by rendering definition data, that may be retrieved from the memory, to display definitions of the variables associated with the selected sampling plan.

In another example, the user may request the device to display interpretations of the identified output values associated with the selected sampling plan. At block 308, the device may respond to the request of the user by rendering interpretation data, that may be retrieved from the memory, to display interpretation of the identified output values associated with the selected sampling plan.

In an example, the user may request the device to display a graph associated with the identified output values. At block 309, the device may respond to the request of the user by rendering graph data, that may be retrieved from the memory, to display a graph associated with the identified output values.

In an example, the user may request the device to generate a report including definitions of variables associated with the selected sampling plan, interpretations associated with the identified output values, and/or a graph associate with the identified output values. Based on the selected sampling plan, the device may determine whether to include a graph in the report to be generated. At block 310, the device may respond to the request of the user by combining definition data, interpretation data, and/or graph data, that may be retrieved from the memory, to render and display a report associated with the selected sampling plan, where the report may include the identified output values. In some examples, the report may also include references and formulas, where the formulas may be a part of the definition data being displayed in the report.

In an example, the user may request the device to share, or distribute, the report generated at block 310. The device may identify a communication module (e.g., an email client) that may be used to distribute the generated report to one or more devices.

Upon execution of blocks 307, 308, 309, 310, and/or 311, the process may end at block 312.

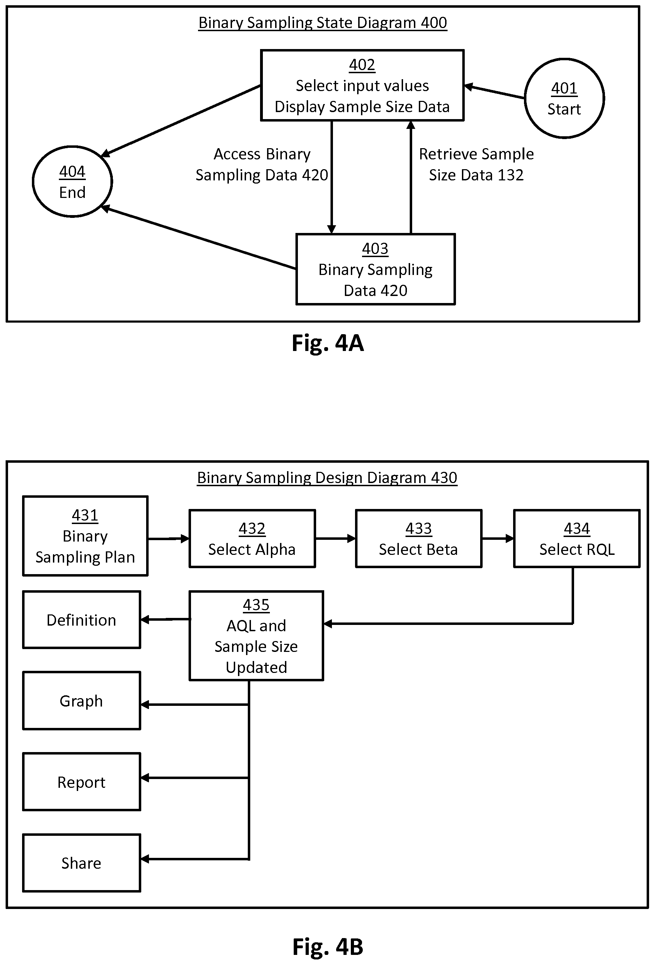

Fig. 4A illustrates a state diagram for an example embodiment related to sample size determination in sampling systems, arranged in accordance with at least some embodiments described herein. As shown in Fig. 4A, a binary sampling state diagram 400 may illustrate one or more transitions between a starting state 401 and an ending state 404 of a determination of sample size data 132 based on a selection of binary sampling plan. Upon a starting state 401, the implementation may transition to block 402, where system 100 may prompt a user (e.g., user 101 described above) to select a set of input values.

System 100 may transition to block 403, where system 100 may access binary sampling data 420 (which may be a part of sampling plan data 126 described above), where binary sampling data 420 may include one or more lookup tables associated with binary sampling plan, and the one or more lookup tables may include input values and output values associated with binary sampling plan. A processor device (e.g., processor 120, or sampling module 130, etc.), may access binary sampling data 420 by performing lookup functions on the one or more lookup tables to identify specific output values based on input values selected by user 101. The processor device may also execute algorithms that may be included in sampling instructions to calculate, or determine, output values based on input values selected by user 101 in order to determine sample size data 132. System 100 may identify or determine sample size data 132 based on the input values, and may transition to block 402 to display sample size data 132. Upon displaying sample size data 132, system 100 may transition to end state 404 to complete determination of sample size data 132 based on a selection of binary sampling plan.

Fig. 4B illustrates a design diagram for an example embodiment related to sample size determination in sampling systems, arranged in accordance with at least some embodiments described herein. As shown in Fig. 4B, a binary sampling design diagram 430 may illustrate an overview of a process starting from a selection of binary sampling plan at block 431 to one or more processing options of a determined sample size at block 435. In an example, upon a selection of binary sampling plan, a user of system 100 may select one or more values for one or more variables associated with binary sampling plan at blocks 432, 433, and 434. Variables that may be associated with binary sampling plan may include alpha (α), beta (β), and rejectable quality level (RQL) associated with binary sampling plan. The user may select alpha at block 432, beta at block 433, and RQL at block 434. Blocks 432, 433, 434 may be performed in an arbitrary order, simultaneously, or at different times. Upon selecting values for alpha, beta, and RQL, at block 435, the system may determine and/or update acceptable quality level (AQL) and a sample size based on the selected input values. The user may request the system to display definitions associated with binary sampling plan, generate a graph associated with the input values, generate a report including the definitions and interpretations of the input values relative to binary sampling plan. The user may also request system 100 to share or distribute the generated report, such as by emailing the report to another user or device.

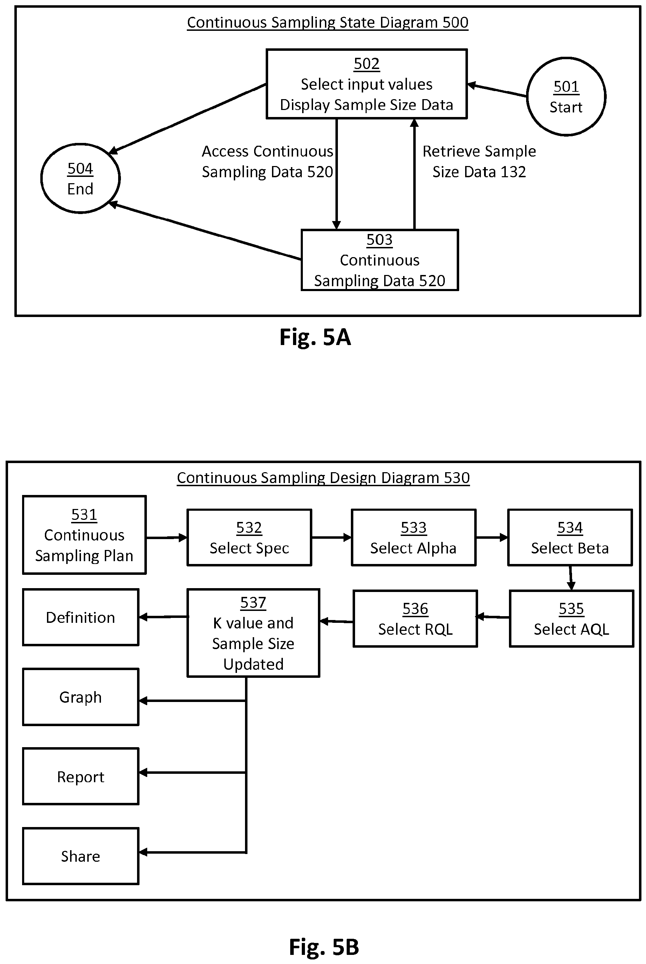

Fig. 5A illustrates a state diagram for an example embodiment related to sample size determination in systematic sampling, arranged in accordance with at least some embodiments described herein. As shown in Fig. 5A, a continuous sampling state diagram 500 may illustrate one or more transitions between a starting state 501 and an ending state 504 of a determination of sample size data 132 based on a selection of continuous sampling plan. Upon a starting state 501, the implementation may transition to block 502, where system 100 may prompt a user (e.g., user 101 described above) to select a set of input values.

System 100 may transition to block 503, where system 100 may access continuous sampling data 520 (which may be a part of sampling plan data 126 described above), where continuous sampling data 520 may include one or more lookup tables associated with continuous sampling plan, and the one or more lookup tables may include input values and output values associated with continuous sampling plan. In some examples, the one or more lookup tables among continuous sampling data 520 may each correspond to different types of continuous sampling plans, such as one-sided continuous sampling plan, or two-sided continuous sampling plan, etc. A processor device (e.g., processor 120, or sampling module 130, etc.), may access continuous sampling data 520 by performing lookup functions on the one or more lookup tables to identify specific output values based on input values selected by user 101. The processor device may also execute algorithms that may be included in sampling instructions to calculate, or determine, output values based on input values selected by user 101 in order to determine sample size data 132. System 100 may identify or determine sample size data 132 based on the input values, and may transition to block 502 to display sample size data 132. Upon displaying sample size data 132, system 100 may transition to end state 504 to complete determination of sample size data 132 based on a selection of continuous sampling plan.

Fig. 5B illustrates a design diagram for an example embodiment related to sample size determination in sampling systems, arranged in accordance with at least some embodiments described herein. As shown in Fig. 5B, a continuous sampling design diagram 530 may illustrate an overview of a process starting from a selection of continuous sampling plan at block 531 to one or more processing options of a determined sample size at block 537. In an example, upon a selection of continuous sampling plan, a user of system 100 may select one or more values for one or more variables associated with continuous sampling plan at blocks 532, 533, 534, 535, and 536. Variables that may be associated with continuous sampling plan may include a specification, alpha (α), beta (β), acceptable quality level (AQL), and rejectable quality level (RQL) associated with continuous sampling plan. The user may select a number of specifications at block 532, alpha at block 533, beta at block 534, AQL at block 535, and RQL at block 536. Blocks 532, 533, 534, 535, 536 may be performed in an arbitrary order, simultaneously, or at different times. Upon selecting values for spec, alpha, beta, AQL, and RQL, at block 537, the system may determine a k-value and a sample size based on the selected input values. In one embodiment, a "match" function may be employed implementing code that matches alpha, beta, AQL, RQL values and number of specifications to the potential choices, and then returns the corresponding k-value and sample size. The user may request the system to display definitions associated with continuous sampling plan, generate a graph associated with the input values, generate a report including the definitions and interpretations of the input values relative to continuous sampling plan. The user may also request system 100 to share or distribute the generated report, such as by emailing the report to another user or device.

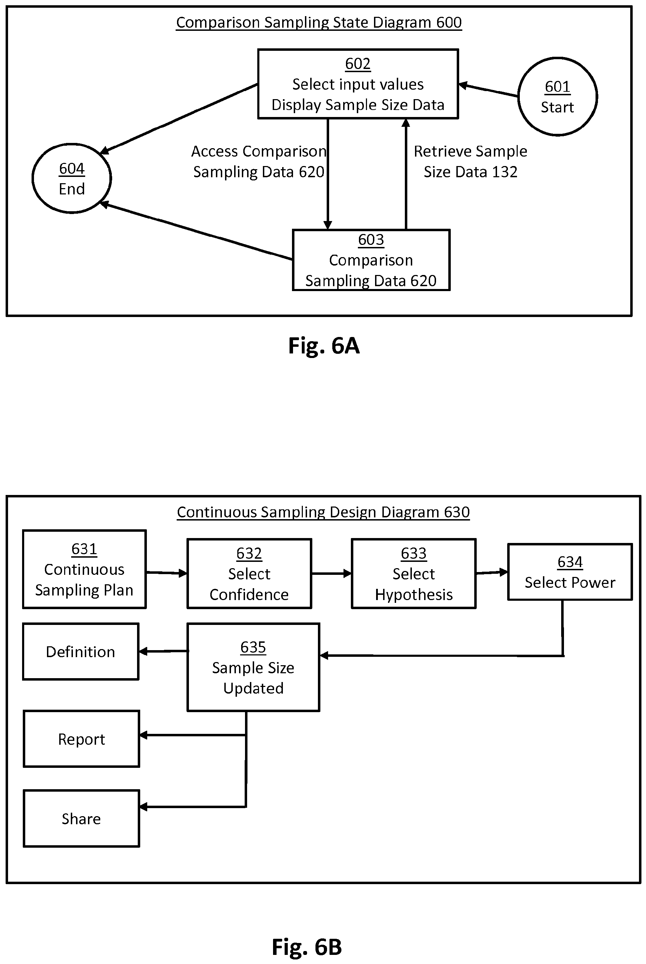

Fig. 6A illustrates a state diagram for an example embodiment related to sample size determination in systematic sampling, arranged in accordance with at least some embodiments described herein. As shown in Fig. 6A, a comparison sampling state diagram 600 may illustrate one or more transitions between a starting state 601 and an ending state 604 of a determination of sample size data 132 based on a selection of comparison sampling plan. Upon a starting state 601, the implementation may transition to block 602, where system 100 may prompt a user (e.g., user 101 described above) to select a set of input values.

System 100 may transition to block 603, where system 100 may access comparison sampling data 620 (which may be a part of sampling plan data 126 described above), where comparison sampling data 620 may include one or more lookup tables associated with comparison sampling plan, and the one or more lookup tables may include input values and output values associated with comparison sampling plan. A processor device (e.g., processor 120, or sampling module 130, etc.), may access comparison sampling data 620 by performing lookup functions on the one or more lookup tables to identify specific output values based on input values selected by user 101. The processor device may also execute algorithms that may be included in sampling instructions to calculate, or determine, output values based on input values selected by user 101 in order to determine sample size data 132. System 100 may identify or determine sample size data 132 based on the input values, and may transition to block 602 to display sample size data 132. Upon displaying sample size data 132, system 100 may transition to end state 604 to complete determination of sample size data 132 based on a selection of comparison sampling plan.

Fig. 6B illustrates a design diagram for an example embodiment related to sample size determination in sampling systems, arranged in accordance with at least some embodiments described herein. As shown in Fig. 6B, a comparison sampling design diagram 630 may illustrate an overview of a process starting from a selection of comparison sampling plan at block 631 to one or more processing options of a determined sample size at block 635. In an example, upon a selection of comparison sampling plan, a user of system 100 may select one or more values for one or more variables associated with comparison sampling plan at blocks 632, 633, and 634. Variables that may be associated with comparison sampling plan may include confidence, hypothesis, and power associated with the comparison sampling plan. The user may select a confidence value at block 632, a hypothesis at block 633, and a power value at block 634. Blocks 632, 633, 634 may be performed in an arbitrary order, simultaneously, or at different times. Upon selecting values for confidence, hypothesis, and power, at block 635, the system may determine a sample size based on the selected input values. The user may request the system to display definitions associated with comparison sampling plan, and generate a report including the definitions and interpretations of the input values relative to comparison sampling plan. The user may also request system 100 to share or distribute the generated report, such as by emailing the report to another user or device.

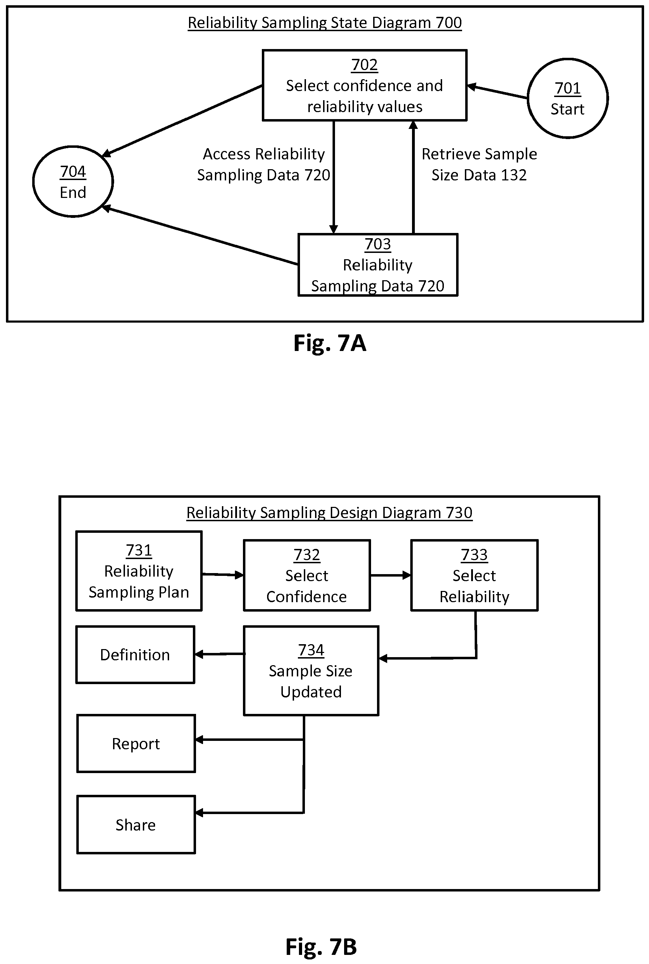

Fig. 7A illustrates a state diagram for an example embodiment related to sample size determination in systematic sampling, arranged in accordance with at least some embodiments described herein. As shown in Fig. 7A, a reliability sampling state diagram 700 may illustrate one or more transitions between a starting state 701 and an ending state 704 of a determination of sample size data 132 based on a selection of reliability sampling plan. Upon a starting state 701, the implementation may transition to block 702, where system 100 may prompt a user (e.g., user 101 described above) to select a set of input values.

System 100 may transition to block 703, where system 100 may access reliability sampling data 720 (which may be a part of sampling plan data 126 described above), where reliability sampling data 720 may include one or more lookup tables associated with reliability sampling plan, and the one or more lookup tables may include input values and output values associated with reliability sampling plan. A processor device (e.g., processor 120, or sampling module 130, etc.), may access continuous sampling data 720 by performing lookup functions on the one or more lookup tables to identify specific output values based on input values selected by user 101. The processor device may also execute algorithms that may be included in sampling instructions to calculate, or determine, output values based on input values selected by user 101 in order to determine sample size data 132. System 100 may identify or determine sample size data 132 based on the input values, and may transition to block 702 to display sample size data 132. Upon displaying sample size data 132, system 100 may transition to end state 704 to complete determination of sample size data 132 based on a selection of reliability sampling plan.

Fig. 7B illustrates a design diagram for an example embodiment related to sample size determination in sampling systems, arranged in accordance with at least some embodiments described herein. As shown in Fig. 7B, a reliability sampling design diagram 730 may illustrate an overview of a process starting from a selection of reliability sampling plan at block 731 to one or more processing options of a determined sample size at block 734. In an example, upon a selection of reliability sampling plan, a user of system 100 may select one or more values for one or more variables associated with reliability sampling plan at blocks 732 and 733. Variables that may be associated with reliability sampling plan may include confidence and reliability associated with reliability sampling plan. The user may select a confidence value at block 732, and a reliability value at block 733. Blocks 732 and 733 may be performed in an arbitrary order, simultaneously, or at different times. Upon selecting values for confidence and reliability, at block 734, the system may determine a sample size based on the selected input values. The user may request the system to display definitions associated with reliability sampling plan, and generate a report including the definitions and interpretations of the input values relative to reliability sampling plan. The user may also request system 100 to share or distribute the generated report, such as by emailing the report to another user or device.

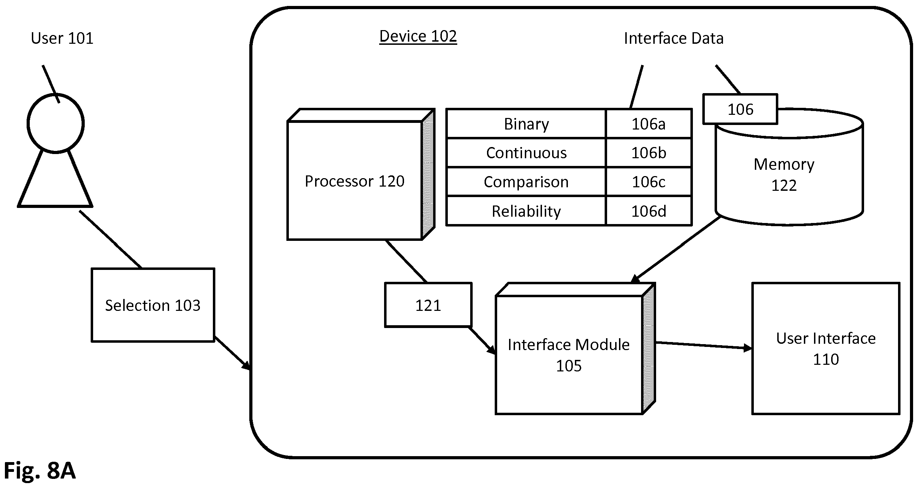

Fig. 8A illustrates the example system of Fig. 1 with additional details relating to sample size determination in sampling systems, arranged in accordance with at least some embodiments described herein. Fig. 8A is substantially similar to computer system 100 of Fig. 1, with additional details. Those components in Fig. 8A that are labeled identically to components of Fig. 1 will not be described again for the purposes of clarity.

As mentioned above, in response to receiving selection 103, interface module 105 may retrieve interface data 106 associated with the selected type of sampling plan from memory 122. Memory 122 may store one or more sets of interface data, where each interface data may be associated with a set of pages for a type of sampling plan. For example, memory 122 may store interface data 106a, 106b, 106c, 106d, associated with binary sampling plan, continuous sampling plan, comparison sampling plan, and reliability sampling plan, respectively. In response to selection 103 indicating a binary sampling plan, processor 120 may generate selection signal 121 to include that binary sampling plan is selected by user 101. In some examples, selection signal 121 may be a bit vector (e.g., "00" for binary sampling, "01" for continuous sampling, etc.). In some examples, selection signal 121 may include a memory address of memory 122 that may be storing interface data 106a associated with binary sampling plan. In some examples, selection signal 121 may include an identification (e.g., numerical value, text, or a combination, etc.) of interface data 106a.

Interface module 105 may receive selection signal 121 and, in response, may identify and retrieve interface data 106a based on the indication of binary sampling plan in selection signal 121. Interface module 105 may render interface data 106a and may output interface data 106a on user interface 110.

In another example, selection signal 121 may indicate that user 101 selected continuous sampling plan. Interface module 105 may receive selection signal 121 and, in response, may identify and retrieve interface data 106b based on the indication of continuous sampling plan in selection signal 121. Interface module 105 may render interface data 106b and may output interface data 106b on user interface 110.

In another example, in response to selection 103 indicating a comparison sampling plan, processor 120 may generate selection signal 121 to indicate that comparison sampling plan is selected by user 101. Interface module 105 may receive selection signal 121 and, in response, may identify and retrieve interface data 106c based on the indication of comparison sampling plan in selection signal 121. Interface module 105 may render interface data 106c and may output interface data 106c on user interface 110.

In another example, in response to selection 103 indicating a reliability sampling plan, processor 120 may generate selection signal 121 to indicate that reliability sampling plan is selected by user 101. Interface module 105 may receive selection signal 121 and, in response, may identify and retrieve interface data 106d based on the indication of comparison sampling plan in selection signal 121. Interface module 105 may render interface data 106d and may output interface data 106d on user interface 110.

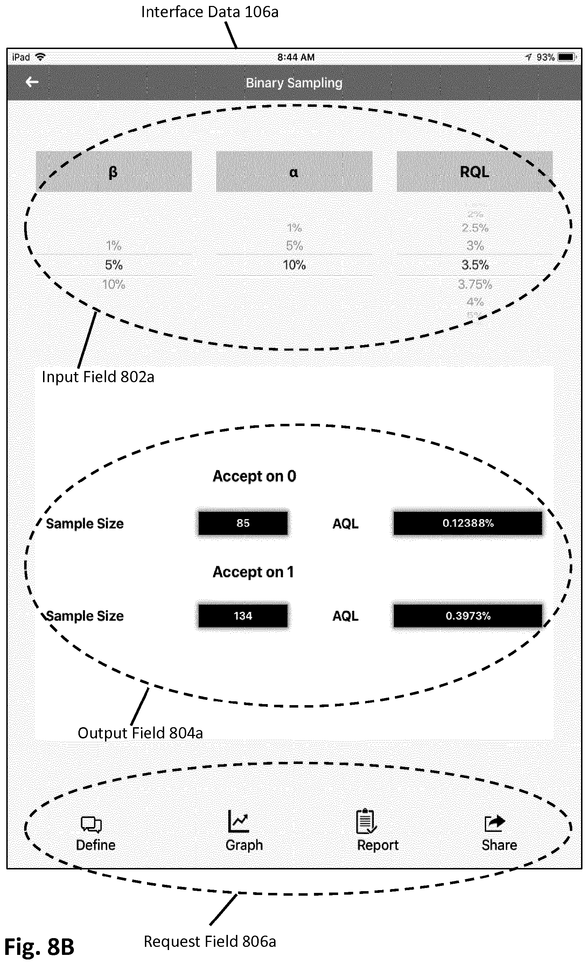

Fig. 8B illustrates an example output of an implementation of the example system of Fig. 1 relating to sample size determination in sampling systems, arranged in accordance with at least some embodiments described herein. As shown in Fig. 8B, interface data 106a, when outputted on user interface 110, may include an input field 802a, an output field 804a, and a request field 806a. Input field 802a may be a field where one or more input values may be selectable by user 101. Input field 802a may include one or more of drop down boxes, text input boxes, scrolling input fields, etc., that may allow user 101 to input desired input values of variables (e.g., α, β, RQL, etc.) associated with binary sampling plan. Output field 804a may include indications of output values being determined by system 100 based on the input values selected or inputted in input field 802a. Input values being selected or input in input field 802a may alter values being outputted in output field 804a. In the example shown in Fig. 8B, input field 802a may include options to select or input values for input variables alpha, beta, and RQL associated with binary sampling plan. Output values that may be displayed in output field 804a may include sample size and AQL associated with two scenarios (accept on 0, and accept on 1) of binary sampling plan. In some examples, output values being displayed in output field 804a may be obtained by performing (such as by processor 120, or sampling module 130) a lookup function in lookup tables included in sampling plan data 126, or may be obtained by calculations based on corresponding algorithms included in sampling instructions 124.

Request field 806a may include one or more options to view and/or generate data associated with the selected sampling plan and input values. For example, user 101 may select "Define" in request field 806a to request device 102 to display definitions of variables, formulas, or other information, associated with binary sampling plan. User 101 may select "Graph" in request field 806a to request device 102 to generate a graph associated with the selected input values. User 101 may select "Report" in request field 806a to request device 102 to display interpretations of the selected input values and the determined output values in relation to binary sampling plan. User 101 may select "Share" in request field 806a to request device 102 to distribute a report that may include one or more of definitions, formulas, interpretations of the selected input values, determined output values, graphs, and/or the determined sample size, associated with binary sampling plan selected by the user.

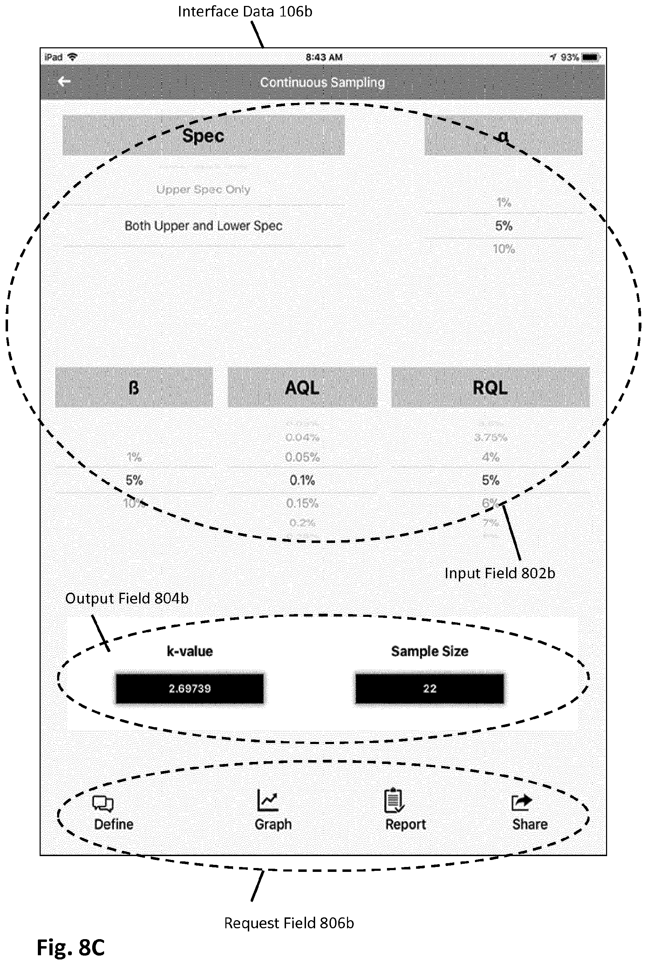

Fig. 8C illustrates an example output of an implementation of the example system of Fig. 1 relating to sample size determination in sampling systems, arranged in accordance with at least some embodiments described herein. As shown in Fig. 8C, interface data 106b, when outputted on user interface 110, may include an input field 802b, an output field 804b, and a request field 806b. Since continuous sampling plan may require a different set of inputs and may result in a different set of outputs when compared to binary sampling plan, input field 802b may be different from input field 802a, and output field 804b may be different from output file 804b. Input field 802b may be a field where one or more input values may be selectable by user 101. Input field 802b may include one or more of drop down boxes, text input boxes, scrolling input fields, etc., that may allow user 101 to input desired input values of variables associated with continuous sampling plan. Output field 804b may include indications of output values being determined by system 100 based on the input values selected or inputted in input field 802b. Input values being selected or input in input field 802b may alter values being outputted in output field 804b. In the example shown in Fig. 8C, input field 802b may include options to select a spec, and to select or input values for input variables alpha (α), beta (β), AQL, and RQL associated with continuous sampling plan. Output values that may be displayed in output field 804b may include a k-value and a sample size associated with continuous sampling plan. In some examples, output values being displayed in output field 804b may be obtained by performing (such as by processor 120, or sampling module 130) a lookup function in lookup tables included in sampling plan data 126, or may be obtained by calculations based on corresponding algorithms included in sampling instructions 124. In one embodiment, a "match" function may be employed implementing code that matches alpha, beta, AQL and RQL values and number of specifications to potential choices, and then returns the corresponding k-value and sample size.

Request field 806b may include one or more options to view and/or generate data associated with the selected sampling plan and input values. For example, user 101 may select "Define" in request field 806b to request device 102 to display definitions of variables, formulas, or other information, associated with continuous sampling plan. User 101 may select "Graph" in request field 806b to request device 102 to generate a graph associated with the selected input values. User 101 may select "Report" in request field 806b to request device 102 to display interpretations of the selected input values and the determined output values in relation to continuous sampling plan. User 101 may select "Share" in request field 806a to request device 102 to distribute a report that may include one or more of definitions, formulas, interpretations of the selected input values, determined output values, graphs, and/or the determined sample size, associated with continuous sampling plan selected by the user.

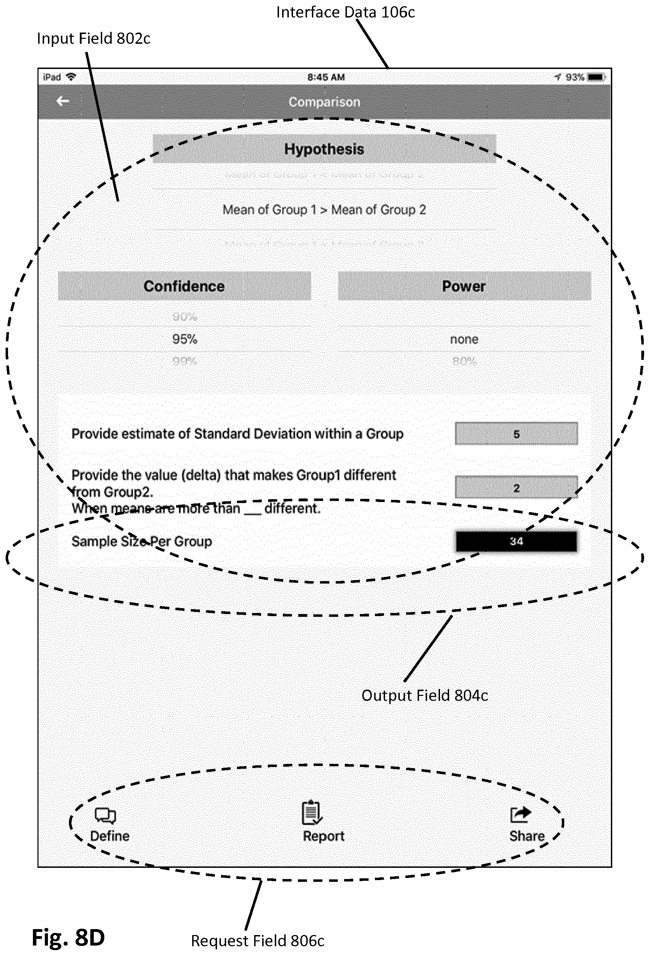

Fig. 8D illustrates an example output of an implementation of the example system of Fig. 1 relating to sample size determination in sampling systems, arranged in accordance with at least some embodiments described herein. As shown in Fig. 8D, interface data 106c, when outputted on user interface 110, may include an input field 802c, an output field 804c, and a request field 806c. Input field 802c may be a field where one or more input values may be selectable by user 101. Input field 802c may include one or more of drop down boxes, text input boxes, scrolling input fields, etc., that may allow user 101 to input desired input values of variables associated with comparison sampling plan. Output field 804c may include indications of output values being determined by system 100 based on the input values selected or inputted in input field 802c. Input values being selected or input in input field 802c may alter values being outputted in output field 804c. In the example shown in Fig. 8D, input field 802c may include options to select or input values for a hypothesis, a confidence value, and a power associated with comparison sampling plan. Input field 802c may further include text boxes for user 101 to input an estimated standard deviation and a value to distinguish two groups, in accordance with comparison sampling plan. Output values that may be displayed in output field 804c may include a sample size associated comparison sampling plan. In some examples, output values being displayed in output field 804c may be obtained by performing (such as by processor 120, or sampling module 130) a lookup function in lookup tables included in sampling plan data 126, or may be obtained by calculations based on corresponding algorithms included in sampling instructions 124.

Request field 806c may include one or more options to view and/or generate data associated with the selected sampling plan and input values. For example, user 101 may select "Define" in request field 806c to request device 102 to display definitions of variables, formulas, or other information, associated with comparison sampling plan. User 101 may select "Report" in request field 806c to request device 102 to display interpretations of the selected input values and the determined output values in relation to comparison sampling plan. User 101 may select "Share" in request field 806a to request device 102 to distribute a report that may include one or more of definitions, formulas, interpretations of the selected input values, determined output values, graphs, and/or the determined sample size, associated with comparison sampling plan selected by the user.

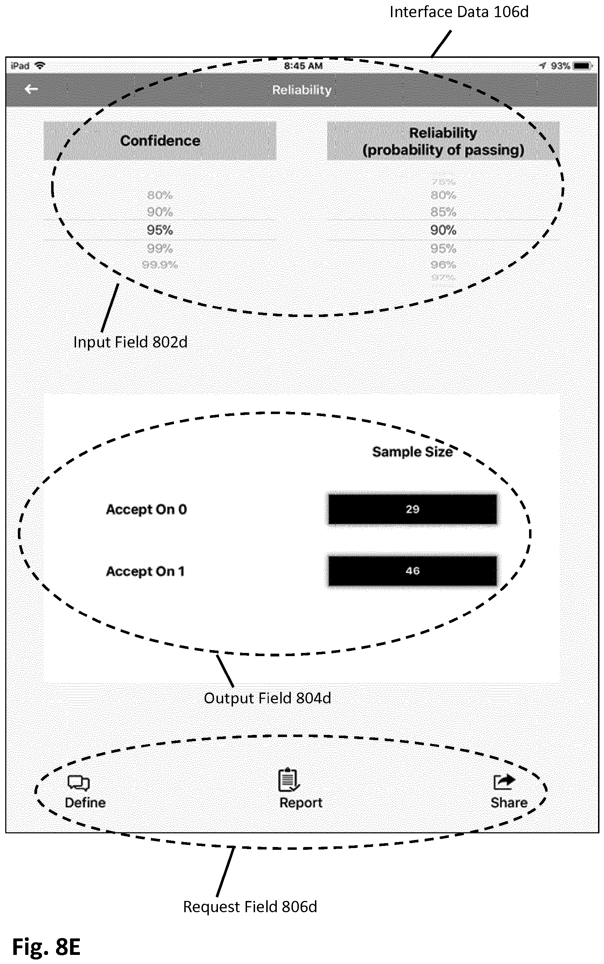

Fig. 8E illustrates an example output of an implementation of the example system of Fig. 1 relating to sample size determination in sampling systems, arranged in accordance with at least some embodiments described herein. As shown in Fig. 8E, interface data 106d, when outputted on user interface 110, may include an input field 802d, an output field 804d, and a request field 806d. Input field 802d may be a field where one or more input values may be selectable by user 101. Input field 802d may include one or more of drop down boxes, text input boxes, scrolling input fields, etc., that may allow user 101 to input desired input values of variables associated with comparison sampling plan. Output field 804d may include indications of output values being determined by system 100 based on the input values selected or inputted in input field 802d. Input values being selected or input in input field 802d may alter values being outputted in output field 804d. In the example shown in Fig. 8E, input field 802d may include options to select or input values for a confidence value and a reliability associated with reliability sampling plan. Output values that may be displayed in output field 804d may include a sample size associated reliability sampling plan. In some examples, output values being displayed in output field 804d may be obtained by performing (such as by processor 120, or sampling module 130) a lookup function in lookup tables included in sampling plan data 126, or may be obtained by calculations based on corresponding algorithms included in sampling instructions 124.

Request field 806d may include one or more options to view and/or generate data associated with the selected sampling plan and input values. For example, user 101 may select "Define" in request field 806d to request device 102 to display definitions of variables, formulas, or other information, associated with reliability sampling plan. User 101 may select "Report" in request field 806d to request device 102 to display interpretations of the selected input values and the determined output values in relation to reliability sampling plan. User 101 may select "Share" in request field 806a to request device 102 to distribute a report that may include one or more of definitions, formulas, interpretations of the selected input values, determined output values, graphs, and/or the determined sample size, associated with reliability sampling plan selected by the user.

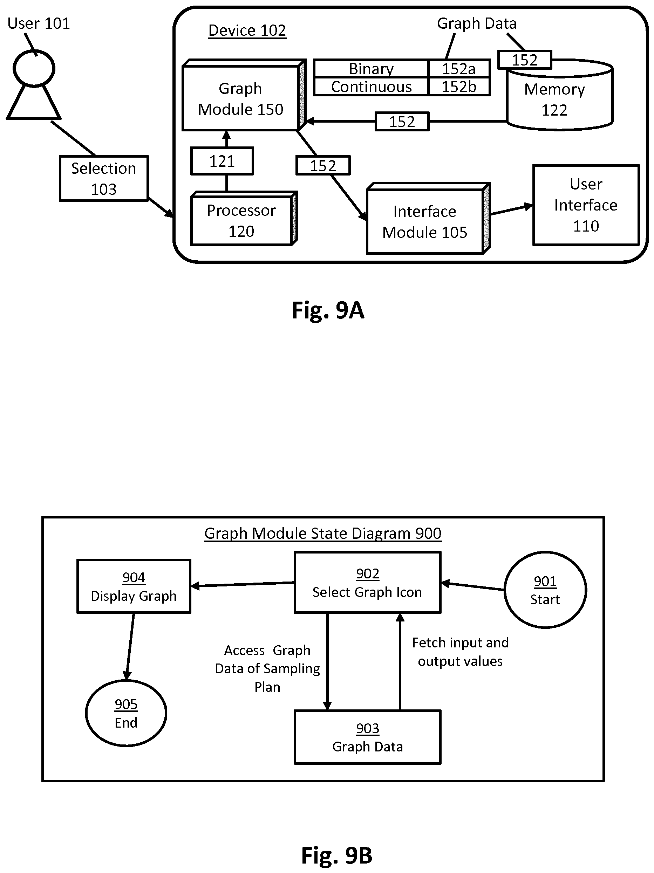

Fig. 9A illustrates the example system of Fig. 1 with additional details relating to sample size determination in sampling systems, arranged in accordance with at least some embodiments described herein. Fig. 9A is substantially similar to computer system 100 of Fig. 1, with additional details. Those components in Fig. 9A that are labeled identically to components of Fig. 1 will not be described again for the purposes of clarity.

Processor 120 may activate graph module 150 if selection 103 indicates a sampling plan that may be associated with outputs that may be represented in a graph. Processor 120 may send selection signal 121 to graph module 150 if graph module 150 is activated. Memory 122 may store one or more sets of graph data, where each graph data may be associated with respective sampling plan. For example, graph data 152a may be associated with binary sampling plan and graph data 152b may be associated with continuous sampling plan.

Fig. 9B illustrates a state diagram for an example embodiment related to sample size determination in sampling systems, arranged in accordance with at least some embodiments described herein. As shown in Fig. 9B, a graph module state diagram 900 may illustrate one or more transitions between a starting state 901 and an ending state 905 of a process to generate and display of graph data 152 associated with sample size data 132 and selection 103. Upon a starting state 901, the process may transition to block 902, where device 102 may receive a selection of a graph icon displayed on user interface 110. The process may transition to block 903, where device 102 may generate and/or access graph data associated with the selected sampling plan. Device 102 may fetch a set of input values selected by the user and may generate graph data 152 based on the input values. The process may transition to block 904 to display graph data 152. Upon displaying graph data 152, system 100 may transition to end state 905 to complete generation and display of graph data 152.

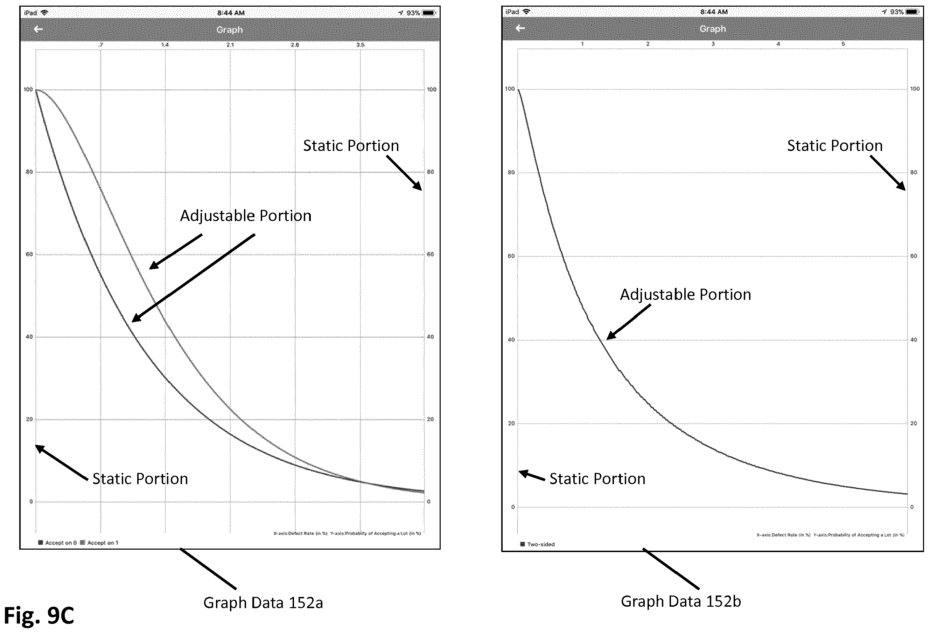

Fig. 9C illustrates an example output of an implementation of the example system of Fig. 1 relating to sample size determination in sampling systems, arranged in accordance with at least some embodiments described herein. As shown in Fig. 9C, each graph data 152 may include one or more static portions (e.g., read-only, or fixed data) and one or more adjustable portions that may be populated with sample size data 132. For example, a static portion of graph data 152a may include an axis (e.g., the y-axis) associated with probable output values that depends on different inputs to variables of binary sampling plan (e.g., the x-axis), and may not be adjustable. Graph data 152a may include an adjustable portion that corresponds to variables or binary sampling plan, such as, for example, the RQL, wherein the adjustable portion may be adjustable and may change based on the inputs entered by user 101. Further, graph data 152a may include two additional adjustable portions that correspond to graphs (e.g., a curves) representative of two sets of outputs (e.g., one for an "accept on 0" condition and one for an "accept on 1" condition) associated with binary sampling plan. As such, as shown in Fig. 9C, graph data 152a, when rendered, may include two curves. Graph data 152b associated with continuous sampling plan, may include one curve.

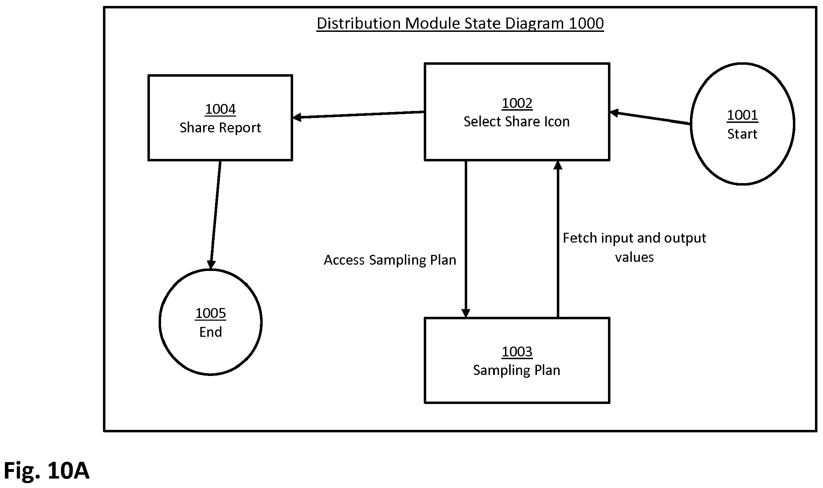

Fig. 10A illustrates a state diagram related to sample size determination in sampling systems, arranged in accordance with at least some embodiments described herein. As shown in Fig. 10A, a distribution module state diagram 1000 may illustrate one or more transitions between a starting state 1001 and an ending state 1005 of a process being implemented by system 100 (described above) to distribute a report. Upon a starting state 1001, the process may transition to block 1002, where system 100 may receive a selection of a share icon displayed on a user interface 110 (described above). The process may transition to block 1003, where system 100 may access sampling plan data associated with the selected sampling plan. Device 102 may fetch a set of input values selected by the user and may generate report 165, and may transition to block 1002 to display report 165. Upon displaying report 165, a user of system 100 viewing the displayed report 165 may transition to block 1004 to distribute report 165 to one or more devices, and subsequently, transition to end state 1005 to complete distribution of report 165.

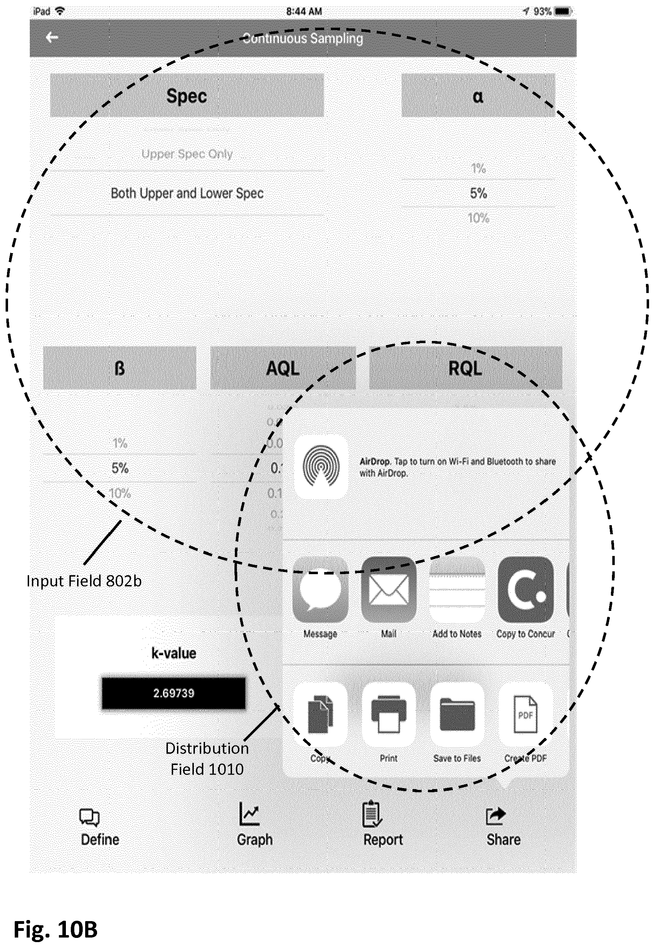

Fig. 10B illustrates an example output of an implementation of the example system of Fig. 1 relating to sample size determination in sampling systems, arranged in accordance with at least some embodiments described herein. As mentioned above, in response to receiving a sharing request, device 102 may instruct the interface module to output one or more distribution options on a user interface. As shown in Fig. 10B, the interface module may output a distribution field 1010, wherein distribution field 1010 may include indications (e.g., user selectable images, icons, etc.) associated with one or more distribution options. A user of device 102 may select one of the options presented in distribution field 1010 to distribute a report including one or more of interpretation data, graph data, definition data, etc., to another device. In some examples, distribution field 1010 may overlap with an input field of interface data, such as input field 802b (shown in Fig. 8C above). In some examples, in response to a user selection of a distribution option presented in distribution field 1010, device 102 may instruct report generation module 160 to generate report 165, and may instruct distribution module 170 to distribute report 165 to another device based on the distribution option selected by the user.

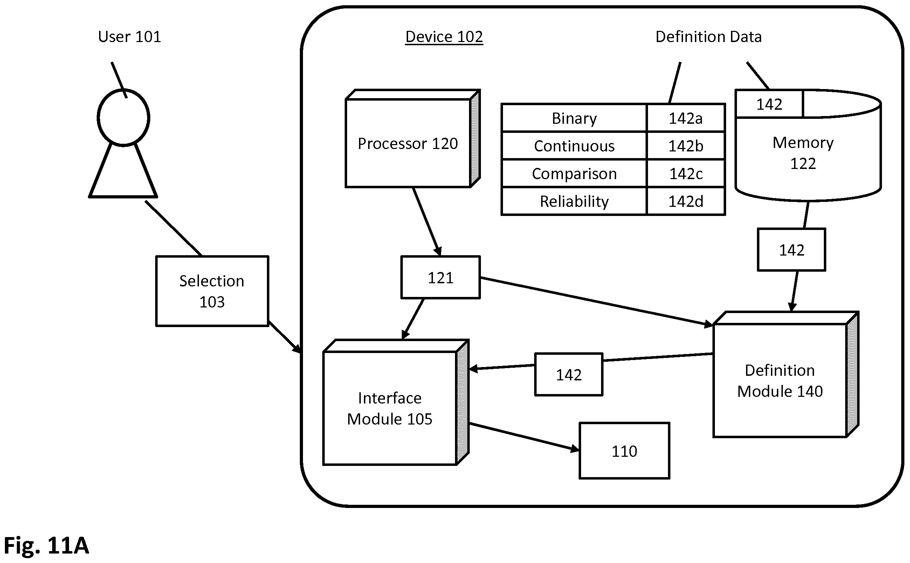

Fig. 11A illustrates the example system of Fig. 1 with additional details relating to sample size determination in sampling systems, arranged in accordance with at least some embodiments described herein. Fig. 11A is substantially similar to computer system 100 of Fig. 1, with additional details. Those components in Fig. 11A that are labeled identically to components of Fig. 1 will not be described again for the purposes of clarity.

As mentioned above, in response to receiving selection 103, definition module 140 may retrieve definition data 142 associated with the selected type of sampling plan from memory 122. Memory 122 may store one or more sets of definition data, where each definition data may be associated with a type of sampling plan. For example, memory 122 may store definition data 142a, 142b, 142c, 142d, associated with binary sampling plan, continuous sampling plan, comparison sampling plan, and reliability sampling plan, respectively. Definition module 140 may receive selection signal 121 and, in response, may identify and retrieve definition data 142a based on the indication of binary sampling plan in selection signal 121. Interface module 105 may render definition data 142a and may output definition data 142a on user interface 110.

In another example, definition module 140 may receive selection signal 121 and, in response, may identify and retrieve definition data 142b based on an indication of continuous sampling plan in selection signal 121. Interface module 105 may render definition data 142b and may output definition data 142b on user interface 110.

In another example, definition module 140 may receive selection signal 121 and, in response, may identify and retrieve definition data 142c based on an indication of comparison sampling plan in selection signal 121. Interface module 105 may render definition data 142c and may output definition data 142c on user interface 110.

In another example, definition module 140 may receive selection signal 121 and, in response, may identify and retrieve definition data 142d based on an indication of reliability sampling plan in selection signal 121. Interface module 105 may render definition data 142d and may output definition data 142d on user interface 110.

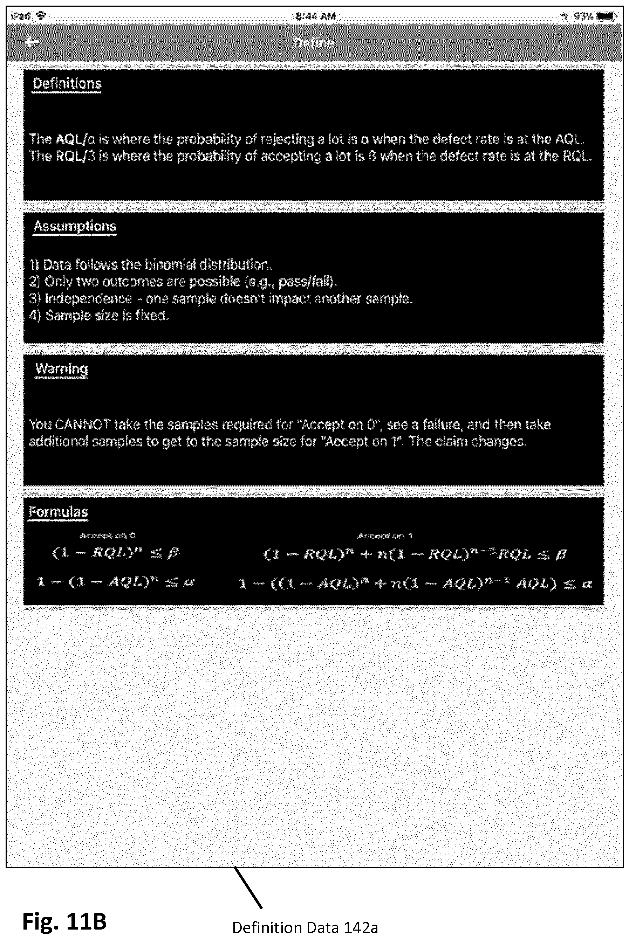

Fig. 11B illustrates an example output of an implementation of the example system of Fig. 1 relating to sample size determination in sampling systems, arranged in accordance with at least some embodiments described herein. As shown in Fig. 11B, definition data 142a, when outputted on user interface 110, may include definitions of one or more input and/or output variables associated with binary sampling plan. Definition data 142a may further include assumptions indicating one or more conditions associated with binary sampling plan. Definition data 142a may further include one or more warnings to alert a user of potential risk of selecting particular values for one or more input and/or output variables associated with binary sampling plan. Definition data 142a may further include one or more formulae associated with binary sampling plan, where the formulae may be embodied as an algorithm, and may take input values selected by user 101 as inputs. Outputs of the formulae may include values in lookup tables included in sampling plan data 126, and outputs of the formulae may include sample size data 132.

An example in binary sampling plan interpretation may be, inspect three hundred units of an object out of a population of forty-five thousand units. If all three hundred units pass inspection, then it can be demonstrated that there is a 95% confidence rate that the probability that any unit from the population will pass inspection is at least 99% and, thus, the population can be released.

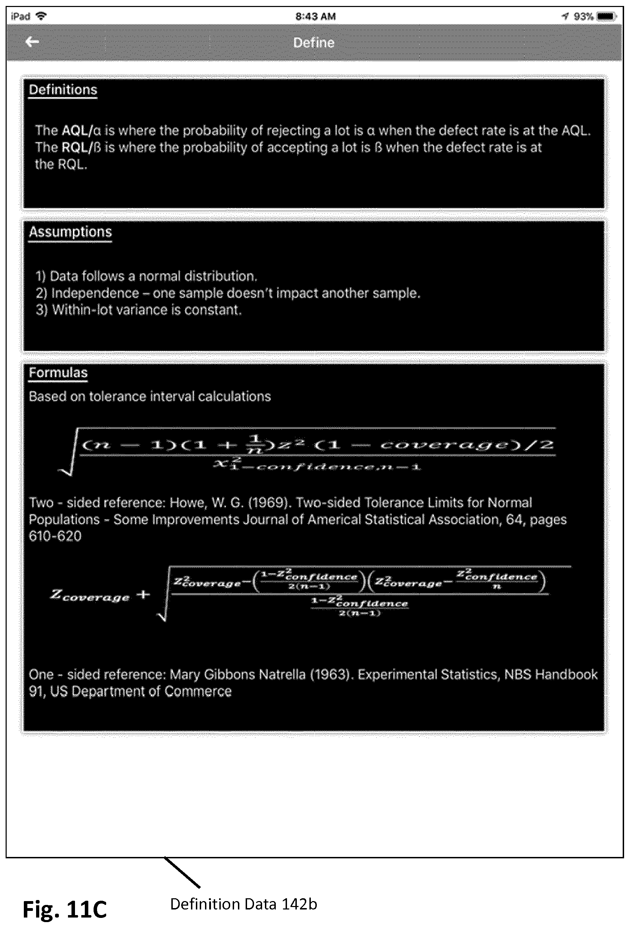

Fig. 11C illustrates an example output of an implementation of the example system of Fig. 1 relating to sample size determination in sampling systems, arranged in accordance with at least some embodiments described herein. As shown in Fig. 11C, definition data 142b, when outputted on user interface 110, may include definitions of one or more input and/or output variables associated with continuous sampling plan. Definition data 142b may further include assumptions indicating one or more conditions associated with continuous sampling plan. Definition data 142b may further include one or more formulae associated with continuous sampling plan, where the formulae may be embodied as an algorithm, and may take input values selected by user 101 as inputs. Outputs of the formulae may include values in lookup tables included in sampling plan data 126, and outputs of the formulae may include sample size data 132.

An example in continuous sampling plan interpretation may be, randomly inspecting thirty contact lenses out of a population of one-hundred thousand contact lenses. A desired outcome may be, for example, if one can demonstrate that there is a 95% confidence that at least 99% of the contact lenses from the population have dimensions within specifications, then the population of contact lenses can be released. Otherwise, we must reject the batch.

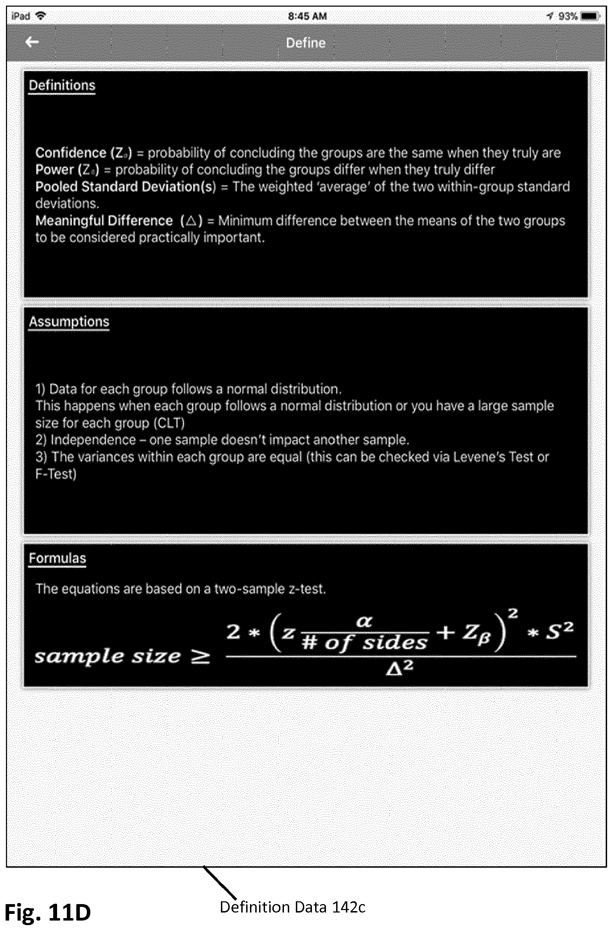

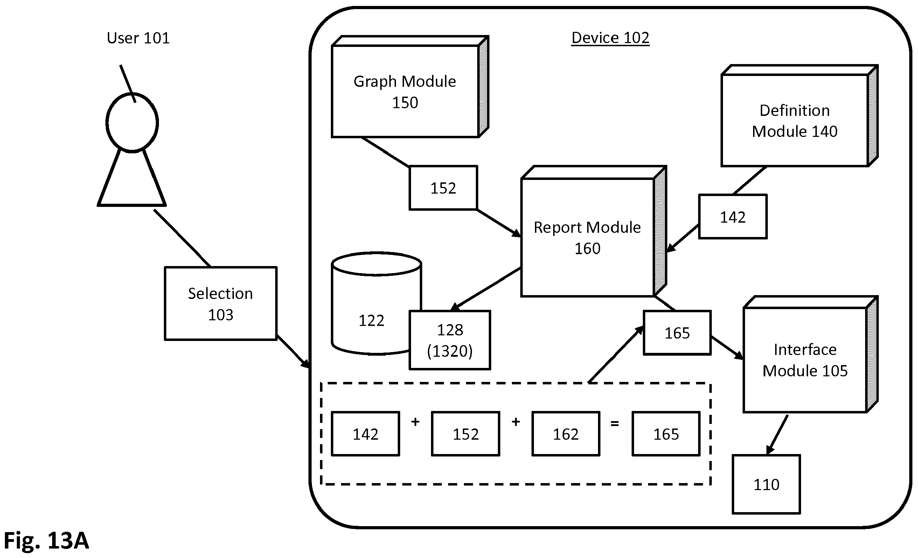

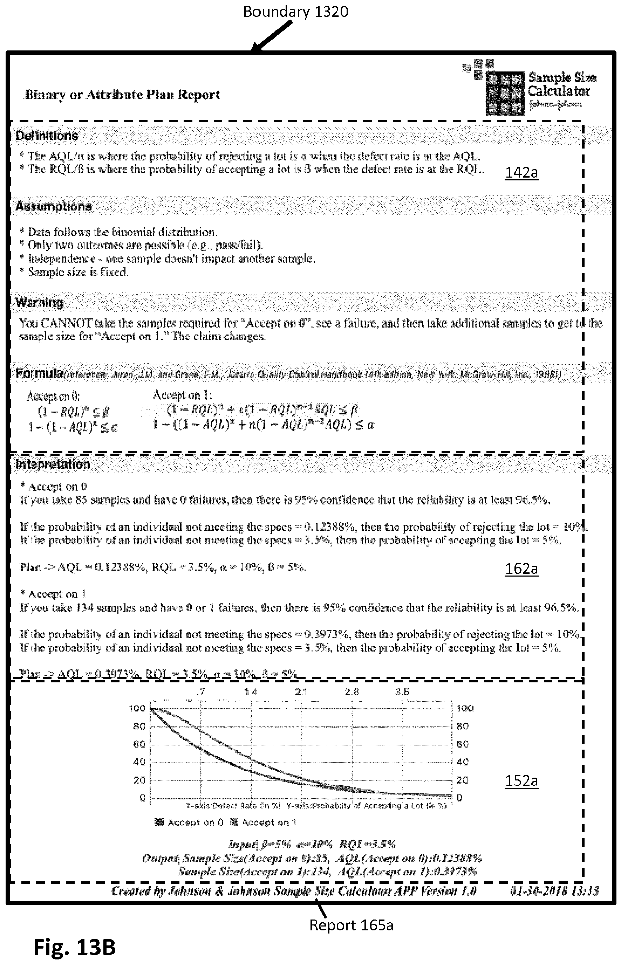

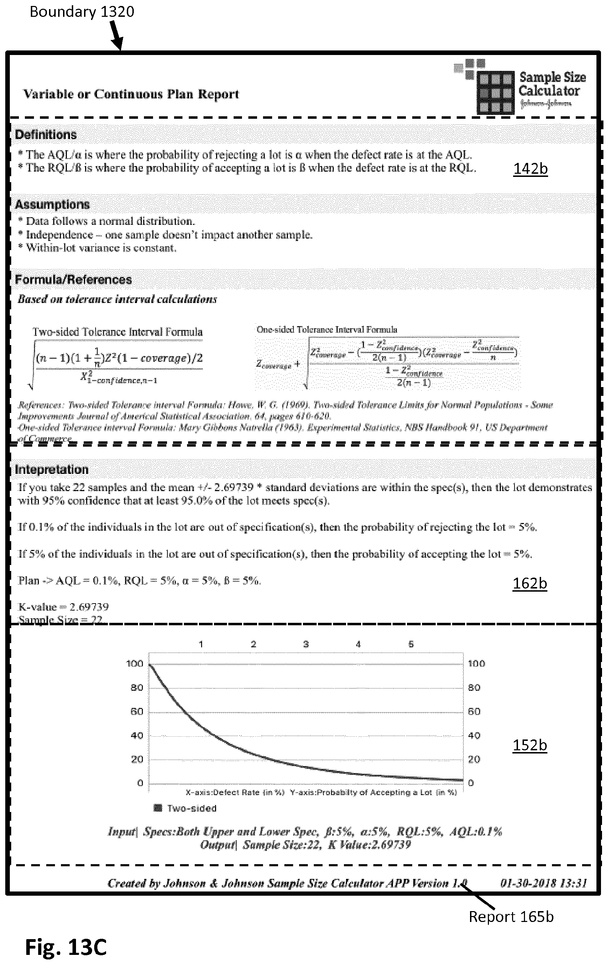

Fig. 11D illustrates an example output of an implementation of the example system of Fig. 1 relating to sample size determination in sampling systems, arranged in accordance with at least some embodiments described herein. As shown in Fig. 13, definition data 142c, when outputted on user interface 110, may include definitions of one or more input and/or output variables associated with comparison sampling plan. Definition data 142c may further include assumptions indicating one or more conditions associated with comparison sampling plan. Definition data 142b may further include one or more formulae associated with comparison sampling plan, where the formulae may be embodied as an algorithm, and may take input values selected by user 101 as inputs. Outputs of the formulae may include values in lookup tables included in sampling plan data 126, and outputs of the formulae may include sample size data 132.

Examples in comparison sampling plan may include comparison of products produced by an entity with products produced by another entity, or comparing test results from two distinct laboratories.

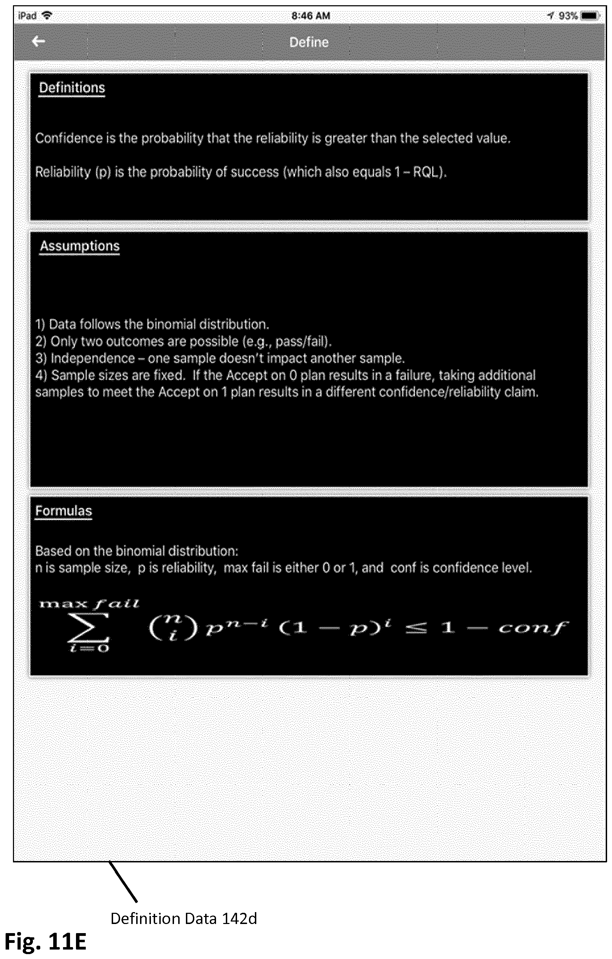

Fig. 11E illustrates an example output of an implementation of the example system of Fig. 1 relating to sample size determination in sampling systems, arranged in accordance with at least some embodiments described herein. As shown in Fig. 13, definition data 142d, when outputted on user interface 110, may include definitions of one or more input and/or output variables associated with reliability sampling plan. Definition data 142d may further include assumptions indicating one or more conditions associated with reliability sampling plan. Definition data 142b may further include one or more formulae associated with reliability sampling plan, where the formulae may be embodied as an algorithm, and may take input values selected by user 101 as inputs. Outputs of the formulae may include values in lookup tables included in sampling plan data 126, and outputs of the formulae may include sample size data 132.

An example in reliability sampling plan may be a determination of whether a population of two million devices is still acceptable after being stored in an undesired environment (e.g., extreme temperatures, flooded areas, etc.). A sample size may need to be chosen for testing in order to determine how many units out of the chosen units can pass a test, and if a particular portion can pass the test, then the population of devices may be deemed as acceptable. Another example in reliability sampling plan may be, upon a transfer of twenty thousand records from one system to another, if sixty records are tested manually and all the tested records transferred correctly, then it can be demonstrated that there is a 95% confidence that the probability that a record transferred correctly is at least 95%.

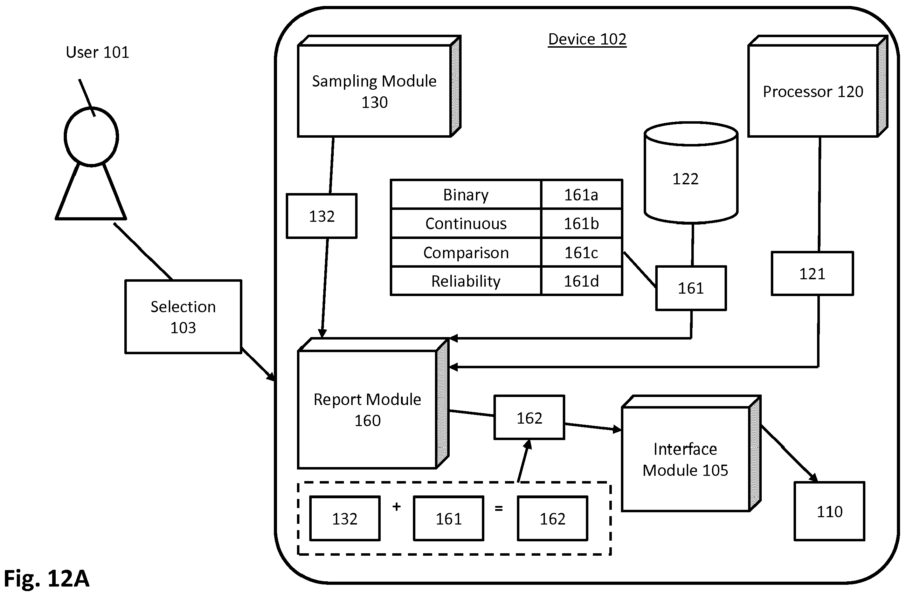

Fig. 12A illustrates the example system of Fig. 1 with additional details relating to sample size determination in sampling systems, arranged in accordance with at least some embodiments described herein. Fig. 12A is substantially similar to computer system 100 of Fig. 1, with additional details. Those components in Fig. 12A that are labeled identically to components of Fig. 1 will not be described again for the purposes of clarity.

As mentioned above, report generation module 160 may retrieve interpretation data 161 associated with the selected type of sampling plan from memory 122. Memory 122 may store one or more sets of interpretation data, where each interpretation data may be associated with a type of sampling plan. For example, memory 122 may store interpretation data 161a, 161b, 161c, 161d, associated with binary sampling plan, continuous sampling plan, comparison sampling plan, and reliability sampling plan, respectively. Report generation module 160 may receive selection signal 121 and, in response, may identify and retrieve interpretation data 161a based on the indication of binary sampling plan in selection signal 121.

Report generation module 160 may receive sample size data 132 from sampling module 130 and, in response, may append sample size data 132 to interpretation data 161a to generate adjusted interpretation data 162a. Report generation module 160 may send adjusted interpretation data 162a to interface module 105. Interface module 105 may render adjusted interpretation data 162a and may output interpretation data 162a on user interface 110.

In another example, report generation module 160 may receive selection signal 121 and, in response, may identify and retrieve interpretation data 161b based on the indication of continuous sampling plan in selection signal 121. Report generation module 160 may receive sample size data 132 from sampling module 130 and, in response, may append sample size data 132 to interpretation data 161b to generate adjusted interpretation data 162b. Report generation module 160 may append sample size data 132 (or populate the adjustable portion) to interpretation data 161b, to generate adjusted interpretation data 162b associated with continuous sampling plan. Report generation module 160 may send adjusted interpretation data 162b to interface module 105. Interface module 105 may render adjusted interpretation data 162b and may output interpretation data 162b on user interface 110.

In another example, report generation module 160 may receive selection signal 121 and, in response, may identify and retrieve interpretation data 161c based on the indication of comparison sampling plan in selection signal 121. Report generation module 160 may receive sample size data 132 from sampling module 130 and, in response, may append sample size data 132 to interpretation data 161c to generate adjusted interpretation data 162c. Report generation module 160 may append sample size data 132 (or populate the adjustable portion) to interpretation data 161c, to generate adjusted interpretation data 162c associated with comparison sampling plan. Report generation module 160 may send adjusted interpretation data 162c to interface module 105. Interface module 105 may render adjusted interpretation data 162c and may output interpretation data 162c on user interface 110.

In another example, report generation module 160 may receive selection signal 121 and, in response, may identify and retrieve interpretation data 161d based on the indication of reliability sampling plan in selection signal 121. Report generation module 160 may receive sample size data 132 from sampling module 130 and, in response, may append sample size data 132 to interpretation data 161d to generate adjusted interpretation data 162d. Report generation module 160 may append sample size data 132 (or populate the adjustable portion) to interpretation data 161d, to generate adjusted interpretation data 162d associated with reliability sampling plan. Report generation module 160 may send adjusted interpretation data 162d to interface module 105. Interface module 105 may render adjusted interpretation data 162d and may output interpretation data 162d on user interface 110.

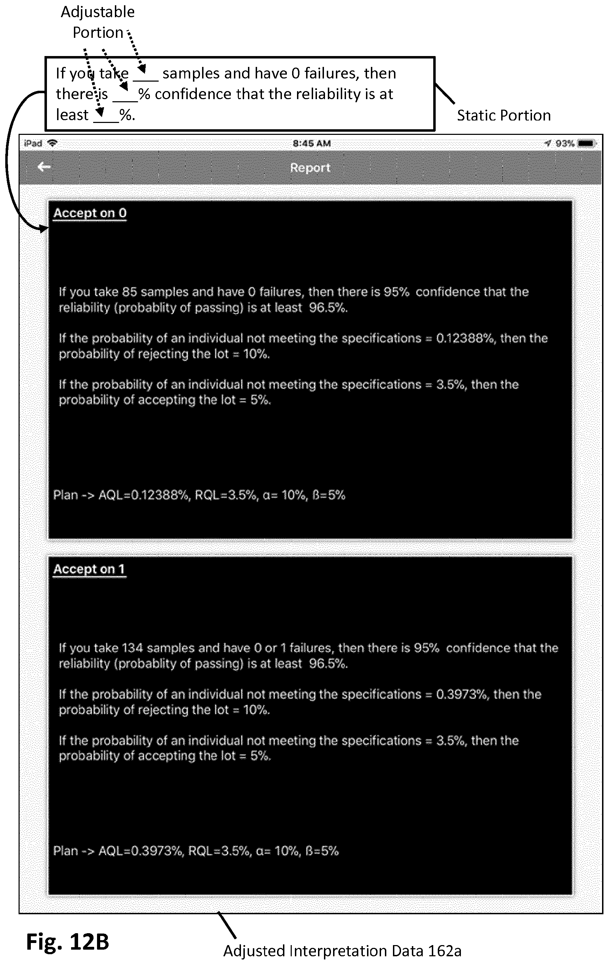

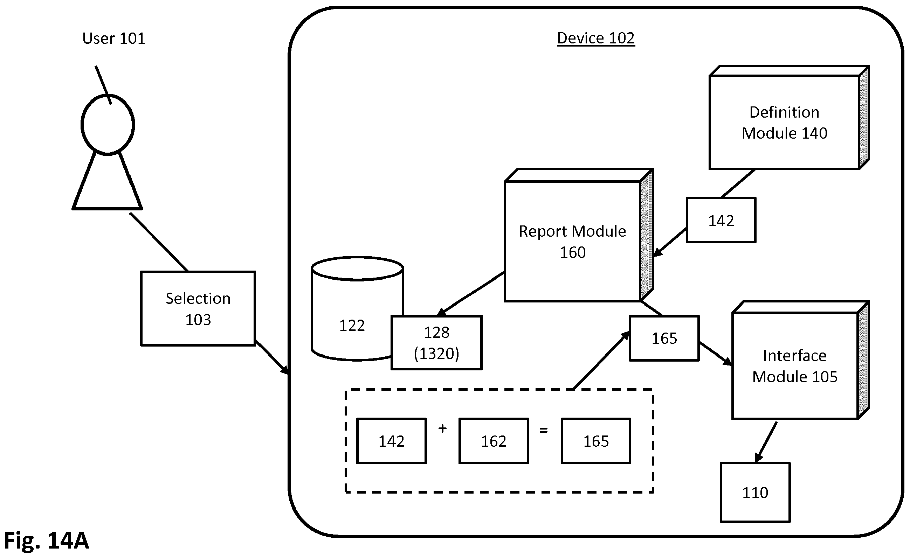

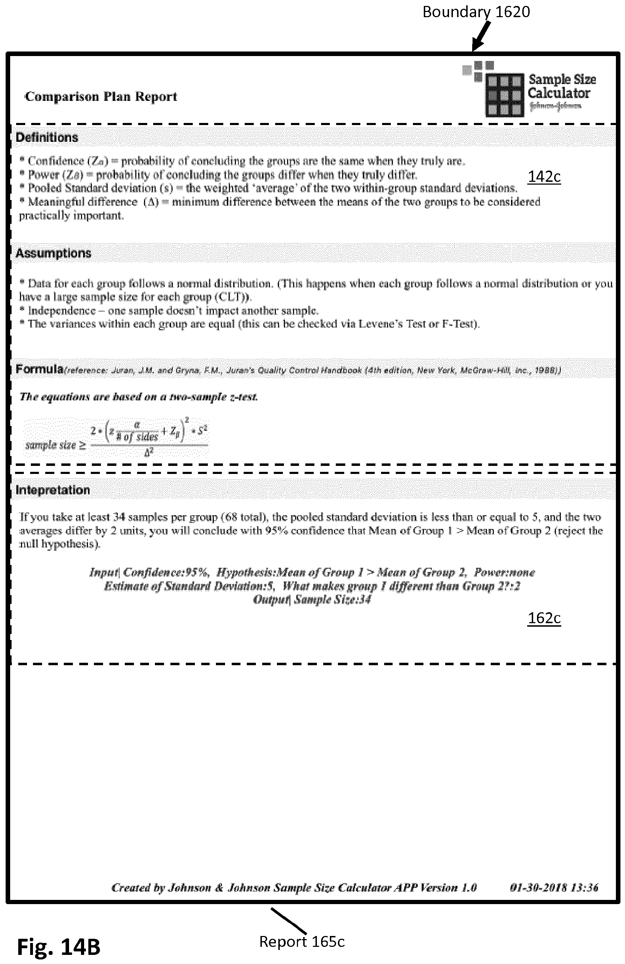

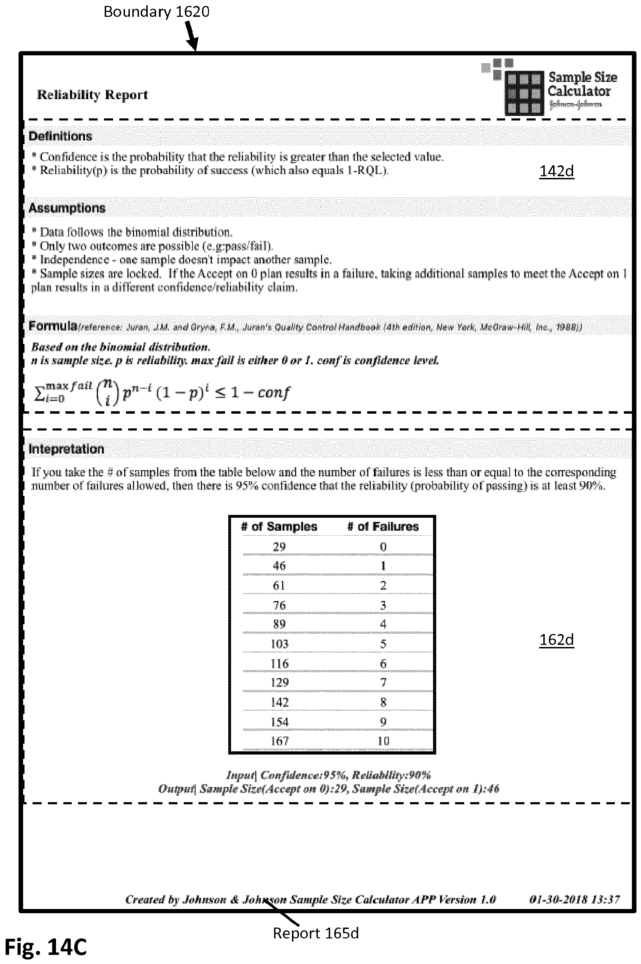

Fig. 12B illustrates an example output of an implementation of the example system of Fig. 1 relating to sample size determination in sampling systems, arranged in accordance with at least some embodiments described herein. As shown in Fig. 12B, interpretation data 161a (as shown in Fig. 12A) may include a static portion and an adjustable portion. The static portion may include text and/or numerical values that may be fixed, and may be associated with an explanation of an interpretation of sample size data 132 in relation to binary sampling plan. For example, a static portion of interpretation data 161a that corresponds to a "accept on 0" condition may include "If you take_samples and have 0 failures, then there is % confidence that the reliability is at least_%." Among the static portion, one or more blank or empty spaces may correspond to an adjustable portion of interpretation data 161a. In the example shown in Fig. 14, sample size data 132 may indicate a sample size of "85", a "95%" confidence, and a "96.5%" reliability. Report generation module 160 may append sample size data 132 (or populate the adjustable portion) to interpretation data 161a, to generate adjusted interpretation data 162a associated with binary sampling plan. Adjusted interpretation data 162a may include "If you take 85 samples and have 0 failures, then there is 95% confidence that the reliability is at least 96.5%." As shown in Fig. 12B, adjusted interpretation data 162a, when outputted on user interface 110, may include interpretations of sample size data 132 in relation to two scenarios ("accept on 0" and "accept on 1") of binary sampling plan. Adjusted interpretation data 162a may further include input values that was selected by user 101.

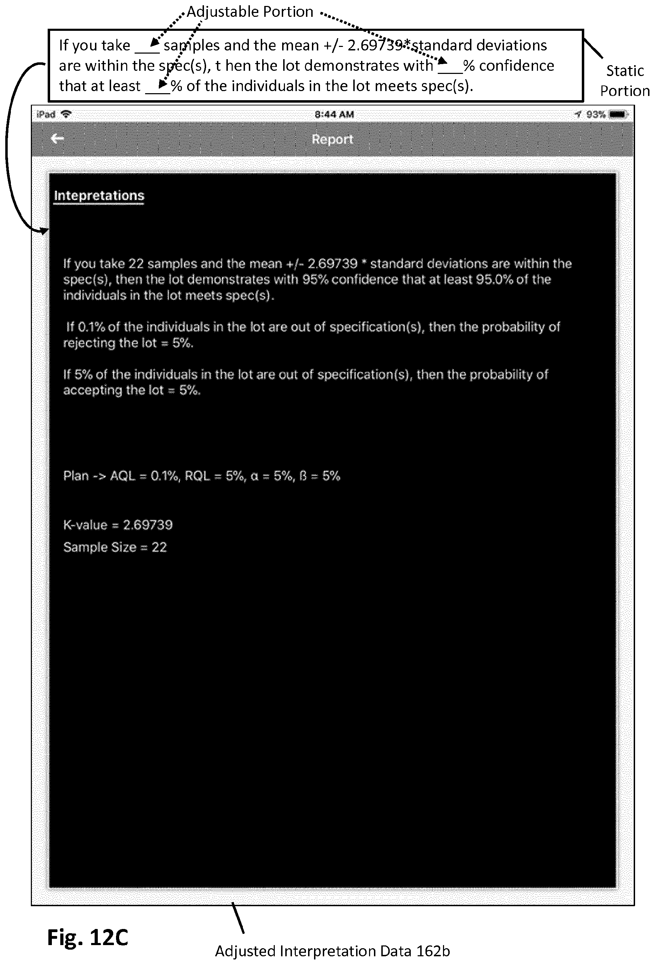

Fig. 12C illustrates an example output of an implementation of the example system of Fig. 1 relating to sample size determination in sampling systems, arranged in accordance with at least some embodiments described herein. As shown in Fig. 12C, interpretation data 161b (as shown in Fig. 12A) may include a static portion and an adjustable portion. The static portion may include text and/or numerical values that may be fixed, and may be associated with an explanation of an interpretation of sample size data 132 in relation to continuous sampling plan. As shown in Fig. 12C, adjusted interpretation data 162b, when outputted on user interface 110, may include interpretations of sample size data 132 in relation to continuous sampling plan, and may further include input values that was selected by user 101.

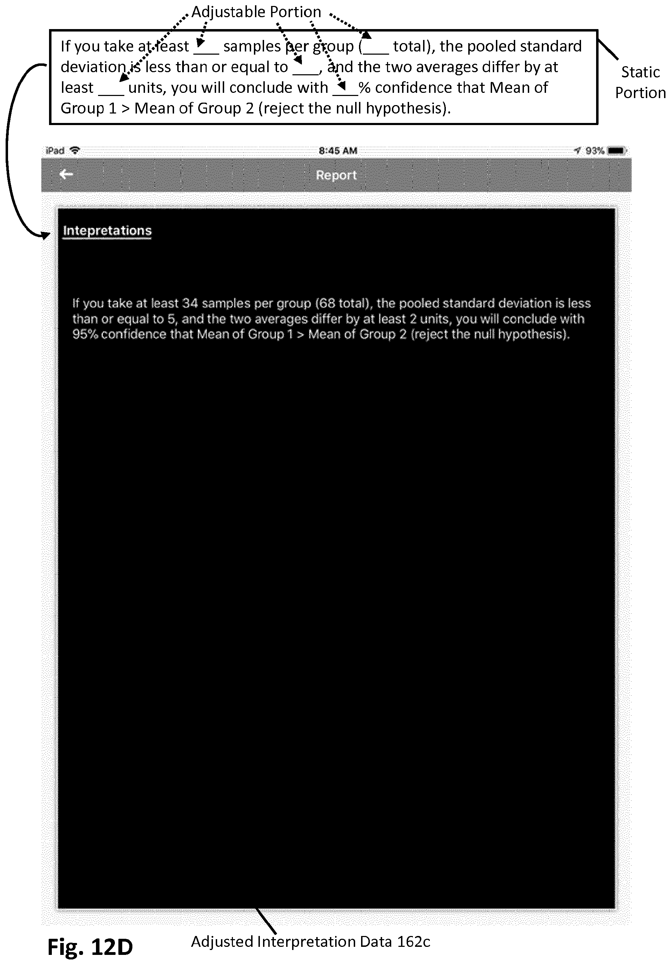

Fig. 12D illustrates an example output of an implementation of the example system of Fig. 1 relating to sample size determination in sampling systems, arranged in accordance with at least some embodiments described herein. As shown in Fig. 12D, interpretation data 161c (as shown in Fig. 12A) may include a static portion and an adjustable portion. The static portion may include text and/or numerical values that may be fixed, and may be associated with an explanation of an interpretation of sample size data 132 in relation to comparison sampling plan. As shown in Fig. 12D, adjusted interpretation data 162c, when outputted on user interface 110, may include interpretations of sample size data 132 in relation to comparison sampling plan, and may further include input values that was selected by user 101.

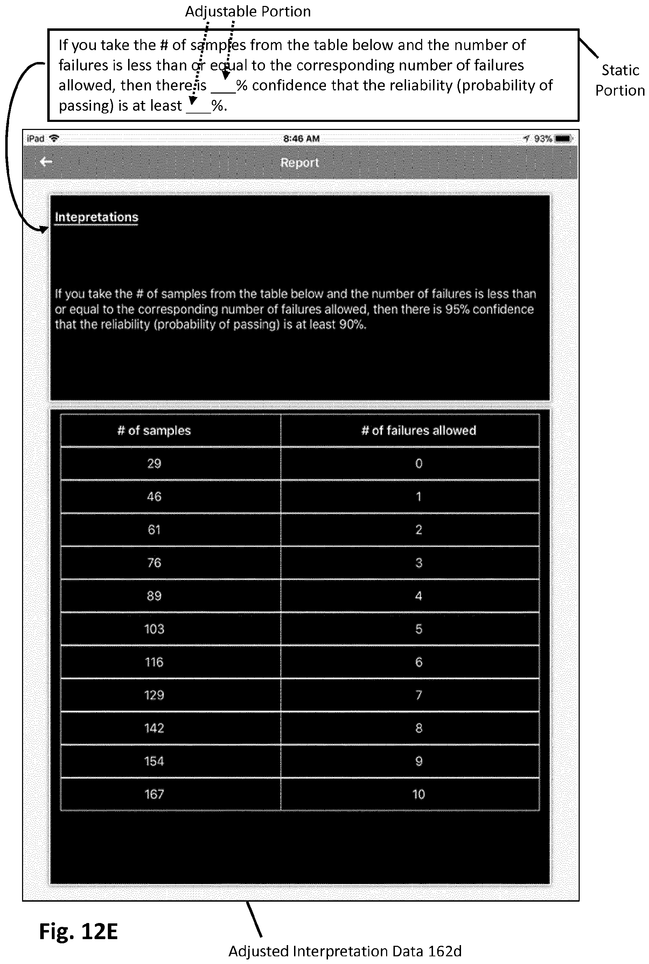

Fig. 12E illustrates an example output of an implementation of the example system of Fig. 1 relating to sample size determination in sampling systems, arranged in accordance with at least some embodiments described herein. As shown in Fig. 12E, interpretation data 161d (as shown in Fig. 12A) may include a static portion and an adjustable portion. The static portion may include text and/or numerical values that may be fixed, and may be associated with an explanation of an interpretation of sample size data 132 in relation to reliability sampling plan. As shown in Fig. 12E, adjusted interpretation data 162d, when outputted on user interface 110, may include interpretations of sample size data 132 in relation to reliability sampling plan, and may further include input values that was selected by user 101.

Fig. 13A illustrates the example system of Fig. 1 with additional details relating to sample size determination in sampling systems, arranged in accordance with at least some embodiments described herein. Fig. 13A is substantially similar to computer system 100 of Fig. 1, with additional details. Those components in Fig. 13A that are labeled identically to components of Fig. 1 will not be described again for the purposes of clarity.

Report generation module 160 may generate a report 165 by combining definition data 142, adjusted interpretation data 162a, and/or graph data 152. In an example, in response to an indication of binary sampling plan in selection signal 121, report generation module 160 may generate a report 165a by combining definition data 142a, graph data 152a, and adjusted interpretation data 162a. In an embodiment, the system may dynamically generate the definitions, assumptions, interpretations and graph from the user input values and concatenate them to form the report. Depending upon a particular mobile device, an external application program interface (API) plug-in may be called for creating a .pdf report such as, PdfBox-Android® version 1.8.9.1 (Registered Trademark of Samsung Inc.), or PDFGenerator V2.0.1 plug-in using cocoapods. Depending upon a particular mobile device, a graph for the report is generated, e.g., using an external plugin API Aspose.Cells and MPAndroidChart, or iOS Charts library. When the α, β, RQL, AQL, confidence and reliability values are stored in local or external memory in Excel® (Registered Trademark of Microsoft Inc.) spread sheet files, the Android®HSSFWorkBook object, may be employed to access the data. Alternately, as the α, β, RQL, AQL, confidence and reliability values may be stored in local or external memory as *.csv files, the XlsxReaderWriter object library may be employed for data access. Report generation module 160 may identify output size threshold 128 in memory 122, where output size threshold 128 may include indications of boundary 1320. Boundary 1320 may be defined by a paper size, or as various values of dimensions such as length and width, etc. For example, boundary 1320 may be defined by a letter size paper. Report generation module 160 may bound definition data 142a, graph data 152a, and adjusted interpretation data 162a within boundary 1320 to generate report 165a.

In another example, in response to an indication of continuous sampling plan in selection signal 121, report generation module 160 may generate a report 165b by combining definition data 142b, graph data 152b, and adjusted interpretation data 162b. Report generation module 160 may identify output size threshold 128 in memory 122, and may bound definition data 142b, graph data 152b, and adjusted interpretation data 162b within boundary 1320 to generate report 165b.

Fig. 13B illustrates an example output of an implementation of the example system of Fig. 1 relating to sample size determination in sampling systems, arranged in accordance with at least some embodiments described herein. As shown in Fig. 13B, report 165a may include definition data 142a, graph data 152a, and adjusted interpretation data 162a bounded within boundary 1320.

Fig. 13C illustrates an example output of an implementation of the example system of Fig. 1 relating to sample size determination in sampling systems, arranged in accordance with at least some embodiments described herein. As shown in Fig. 13C, report 165b may include definition data 142b, graph data 152b, and adjusted interpretation data 162b bounded within boundary 1320.

Fig. 14A illustrates the example system of Fig. 1 with additional details relating to sample size determination in sampling systems, arranged in accordance with at least some embodiments described herein. Fig. 14A is substantially similar to computer system 100 of Fig. 1, with additional details. Those components in Fig. 14A that are labeled identically to components of Fig. 1 will not be described again for the purposes of clarity.

In another example, in response to an indication of comparison sampling plan in selection signal 121, report generation module 160 may generate a report 165c by combining definition data 142c and adjusted interpretation data 162c. Report generation module 160 may identify output size threshold 128 in memory 122, and may bound definition data 142c and adjusted interpretation data 162c within boundary 1320 to generate report 165c.

In another example, in response to an indication of reliability sampling plan in selection signal 121, report generation module 160 may generate a report 165d by combining definition data 142d and adjusted interpretation data 162d. Report generation module 160 may identify output size threshold 128 in memory 122, and may bound definition data 142d and adjusted interpretation data 162d bounded within boundary 1320 to generate report 165d.

Fig. 14B illustrates an example output of an implementation of the example system of Fig. 1 relating to sample size determination in sampling systems, arranged in accordance with at least some embodiments described herein. As shown in Fig. 14B, report 165c may include definition data 142c and adjusted interpretation data 162c bounded within boundary 1320.

Fig. 14C illustrates an example output of an implementation of the example system of Fig. 1 relating to sample size determination in sampling systems, arranged in accordance with at least some embodiments described herein. As shown in Fig. 14C, report 165d may include definition data 142d and adjusted interpretation data 162d bounded within boundary 1320.

A system in accordance with the present disclosure may provide automation in sample size determination and also in documentation of the determined sample size. Further, in some examples, documentation of a choice of sample size may be used as evidence during various types of audit processes. A system in accordance with the present disclosure may provide a standardized documentation scheme that may provide justification for a chosen sample size. A system in accordance with the present disclosure may also provide clarity to users who may not be skilled in fields associated with the determined sample size in order to allow the users to make an appropriate decision as to whether untested objects are acceptable or not. Further, documentations that are lengthy may cause a user of the determined sample size to be frustrated and thus, may negatively affect a decision based on the determined sample size. A system in accordance with the present disclosure may bound the documentation to a particular size, such that users consuming the documentation may obtain important information within a brief amount of time without causing further confusion and frustration.

A system in accordance with the present disclosure may also improve monetary savings by determining an appropriate sample size such that oversampling or under sampling may be avoided. An improvement in documentation may lead to an improvement in compliance. For example, a one-page report may be easily justified in an audit process, and approaches and outputs may be harmonized across a same industry. By providing definitions, graphs, interpretations that may be easily understood by users who may not be skilled in a related industry, the users may have confidence that the determine sample size is appropriate, and compliance issues may be reduced.

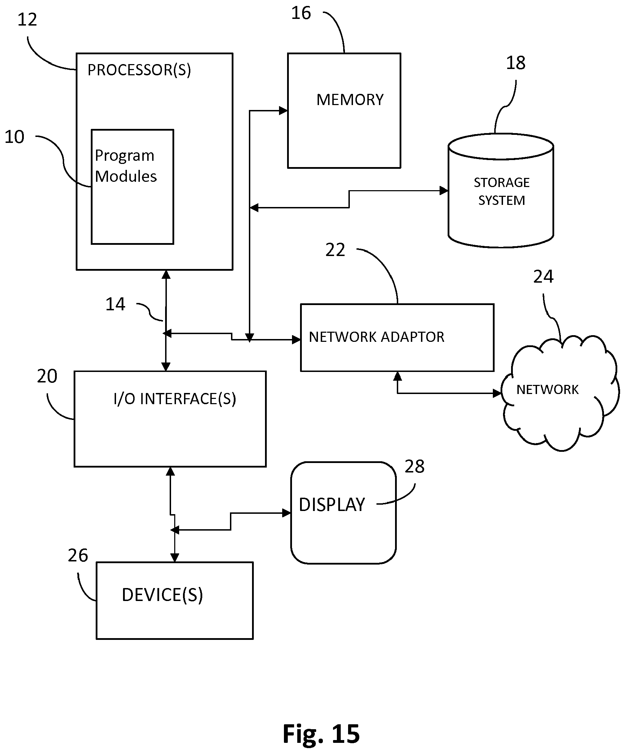

Fig. 15 illustrates a schematic of an example computer or processing system that may implement any portion of computer system 100, processor 120, memory 122, sampling module 130, definition module 140, graph module 150, report generation module 160, distribution module 170, systems, methods, and computer program products described herein in one embodiment of the present disclosure. The computer system is only one example of a suitable processing system and is not intended to suggest any limitation as to the scope of use or functionality of embodiments of the methodology described herein. The processing system shown may be operational with numerous other general purpose or special purpose computer system environments or configurations. Examples of well-known computer systems, environments, and/or configurations that may be suitable for use with the processing system may include, but are not limited to, personal computer systems, server computer systems, thin clients, thick clients, handheld or laptop devices, multiprocessor systems, microprocessor-based systems, set top boxes, programmable consumer electronics, mobile phones, smart phones, wearable devices, network PCs, minicomputer systems, mainframe computer systems, and distributed cloud computing environments that include any of the above systems or devices, and the like.

The computer system may be described in the general context of computer system executable instructions, such as program modules, being executed by a computer system. Generally, program modules may include routines, programs, objects, components, logic, data structures, and so on that perform particular tasks or implement particular abstract data types. The computer system may be practiced in distributed cloud computing environments where tasks are performed by remote processing devices that are linked through a communications network. In a distributed cloud computing environment, program modules may be located in both local and remote computer system storage media including memory storage devices.

The components of computer system may include, but are not limited to, one or more processors or processing units 12, a system memory 16, and a bus 14 that couples various system components including system memory 16 to processor 12. The processor 12 may include a software module 10 that performs the methods described herein. The module 10 may be programmed into the integrated circuits of the processor 12, or loaded from memory 16, storage device 18, or network 24 or combinations thereof.

Bus 14 may represent one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnects (PCI) bus.

Computer system may include a variety of computer system readable media. Such media may be any available media that is accessible by computer system, and it may include both volatile and non-volatile media, removable and non-removable media.

System memory 16 can include computer system readable media in the form of volatile memory, such as random-access memory (RAM) and/or cache memory or others. Computer system may further include other removable/non-removable, volatile/non-volatile computer system storage media. By way of example only, storage system 18 can be provided for reading from and writing to a non-removable, non-volatile magnetic media (e.g., a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to bus 14 by one or more data media interfaces.

Computer system may also communicate with one or more external devices 26 such as a keyboard, a pointing device, a display 28, etc.; one or more devices that enable a user to interact with computer system; and/or any devices (e.g., network card, modem, etc.) that enable computer system to communicate with one or more other computing devices. Such communication can occur via Input/Output (I/O) interfaces 20.

Still yet, computer system can communicate with one or more networks 24 such as a local area network (LAN), a general wide area network (WAN), and/or a public network (e.g., the Internet) via network adapter 22. As depicted, network adapter 22 communicates with the other components of computer system via bus 14. It should be understood that although not shown, other hardware and/or software components could be used in conjunction with computer system. Examples include, but are not limited to: microcode, device drivers, redundant processing units, external disk drive arrays, RAID systems, tape drives, and data archival storage systems, etc.

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A method for determining a sample size for a sampling system, the method comprising:
receiving, by a device, a selection indicating a type of sampling plan;
sending, by a processor of the device, the selection to an interface module of the device;
sending, by the processor, the selection to a sampling module of the device;
retrieving, by the interface module, interface data associated with the selected type of sampling plan, wherein the interface data, when rendered by the device, is outputted as a user interface;
outputting, by the interface module, the user interface on a display of the device, wherein the user interface includes one or more options associated with the selected type of sampling plan;
receiving, by the device, a set of input values of the one or more options through the user interface; and
determining, by the sampling module, sample size data based on the set of input values, wherein the sample size data indicates an optimal number of samples to be used in the selected sampling plan.

2. The method of claim 1, further comprising:
sending, by the sampling module, the sample size data to the interface module; and
outputting, by the interface module, the sample size data on the user interface.

3. The method of claim 1, further comprising:
receiving, by the processor, a graph request through the user interface;
activating, by the processor, a graph module of the device;
sending, by the processor, the selection to the activated graph module;
generating, by the graph module, graph data based on the set of inputs, wherein the graph data is associated with the selected type of sampling plan;
sending, by the graph module, the graph data to the interface module; and
outputting, by the interface module, the graph data on the user interface.

4. The method of claim 1, further comprising:
receiving, by the processor, a definition request through the user interface;
sending, by the processor, the selection to a definition module of the device;
retrieving, by the definition module, definition data from a memory, wherein the definition data includes definitions of a set of variables associated with the selected type of sampling plan;
sending, by the definition module, the definition data to the interface module; and
outputting, by the interface module, the definition data on the user interface.

5. The method of claim 1, further comprising:
receiving, by the processor, an interpretation request through the user interface;
sending, by the processor, the selection to a report generation module of the device;
retrieving, by the report generation module, interpretation data from a memory, wherein the interpretation data is associated with an interpretation related to the selected type of sampling plan, and the interpretation data includes a static portion and an adjustable portion;
sending, by the sampling module, the determined sample size data to the report generation module;
populating, by the report generation module, the adjustable portion of the interpretation data with the sample size data to generate adjusted interpretation data;
sending, by the report generation module, the adjusted interpretation data to the interface module; and
outputting, by the interface module, the adjusted interpretation data the user interface.

6. The method of claim 1, further comprising, in response to receiving the selection:
sending, by the processor, the selection to a definition module of the device;
sending, by the processor, the selection to a report generation module of the device;
retrieving, by the definition module, definition data from a memory, wherein the definition data includes definitions of a set of variables associated with the selected type of sampling plan;
retrieving, by the report generation module, interpretation data from the memory, wherein the interpretation data is associated with an interpretation related to the selected type of sampling plan, and the interpretation data includes a static portion and an adjustable portion;
sending, by the sampling module, the determined sample size data to the report generation module;
populating, by the report generation module, the adjustable portion of the interpretation data with the sample size data to generate adjusted interpretation data;
sending, by the definition module, the definition data to the interface module;
combining, by the report generation module, the adjusted interpretation data with the definition data to generate a report;
sending, by the report generation module, the report to the interface module; and
outputting, by the interface module, the report on the user interface, wherein the report includes the definition data and the adjusted interpretation data indicating the determined sample size.

7. The method of claim 6, wherein combining the adjusted interpretation data with the definition data includes bounding, by the report generation module, the adjusted interpretation data and the definition data within an output size threshold to generate the report, wherein the report includes the definition data and the adjusted interpretation data within a set of boundaries defined by the output size threshold.

8. The method of claim 6, further comprising:
sending, by the processor, the selection to an activated graph module of the device;
generating, by the graph module, graph data based on the set of inputs, wherein the graph data is associated with the selected type of sampling plan;
sending, by the graph module, the graph data to the report generation module, wherein generation of the report further comprises combining, by the report generation module, the graph data with the adjusted interpretation data and with the definition data to generate the report.

9. The method of claim 6, further comprising:
receiving, by the processor, a distribution request through the user interface;
in response to receipt of the distribution request, outputting, by the interface module, one or more distribution options on the user interface;
receiving, by the processor, a selection of distribution option;
sending, by the processor, the selection of distribution option to the distribution module;
identifying, by the distribution module, a communication module of the device based on the selection of distribution option; and
distributing, by the processor, the report with use of the identified communication module.

10. A system effective to determine a sample size for a sampling system, the system comprising:
a memory;
a processor configured to be in communication with the memory;
an interface module configured to be in communication with the memory and the processor;
a sampling module configured to be in communication with the memory and the processor;
the memory is configured to store a set of interface data, wherein each interface data is associated with a type of sampling plan, and the interface data, when rendered by the system, is outputted as a user interface;
the processor is configured to:
receive a selection indicating a type of sampling plan; and
send the selection to the interface module;
send the selection to the sampling module;
the interface module is configured to:
retrieve interface data associated with the selected type of sampling plan;
output the user interface on a display, wherein the user interface includes one or more options associated with the selected type of sampling plan;
the processor is further configured to receive a set of input values of the one or more options through the user interface;
the sampling module is configured to:
determine sample size data based on the set of input values, wherein the sample size data indicates an optimal number of samples to be used in the selected sampling plan; and
send the determined sample size data to the interface module;
the interface module is further configured to output the sample size data on the user interface.

11. The method of claim 1 or the system of claim 10, wherein the selected type of sampling plan is selected from a group including variable acceptance sampling, binary acceptance sampling, dual group comparison sampling, and reliability sampling.

12. The system of claim 10, further comprising a graph module configured to be in communication with the memory, the processor, the sampling module, and the interface module, wherein the processor is further configured to:
receive a graph request through the user interface;
activate a graph module of the device;
send the selection to the activated graph module;
the graph module is configured to:
generate graph data based on the set of inputs, wherein the graph data is associated with the selected type of sampling plan;
send the graph data to the interface module; and
the interface module is further configured to output the graph data on the user interface.

13. The system of claim 10, further comprising a definition module configured to be in communication with the memory, the processor, the sampling module, and the interface module, wherein the memory is further configured to store a set of definition data, each definition data includes definitions of a set of variables associated with a type of sampling plan, and the processor is further configured to:
receive a definition request through the user interface;
send the selection to the definition module;
the definition module is configured to:
retrieve definition data from the memory, wherein the retrieved definition data includes definitions of a set of variables associated with the selected type of sampling plan;
send the definition data to the interface module; and
the interface module is further configured to output the definition data on the user interface.

14. The system of claim 10, further comprising a report generation module configured to be in communication with the memory, the processor, the sampling module, and the interface module, wherein the memory is further configured to store a set of interpretation data, each interpretation data is associated with an interpretation related to a type of sampling plan, and each interpretation data includes a static portion and an adjustable portion, and the processor is further configured to:
receive an interpretation request through the user interface;
send the selection to the report generation module;
the sampling module is further configured to send the determined sample size data to the report generation module;
the report generation module is configured to:
retrieve interpretation data from the memory, wherein the retrieved interpretation data is associated with an interpretation related to the selected type of sampling plan, and the interpretation data includes a static portion and an adjustable portion;
populate the adjustable portion of the interpretation data with the sample size data to generate adjusted interpretation data;
send the adjusted interpretation data to the interface module; and
the interface module is further configured to output the adjusted interpretation data to the user interface.

15. The system of claim 10, further comprising:
a definition module configured to be in communication with the memory, the processor, the sampling module, and the interface module;
a report generation module configured to be in communication with the memory, the processor, the sampling module, and the interface module;
wherein the memory is further configured to store:
a set of definition data, each definition data includes definitions of a set of variables associated with a type of sampling plan;
a set of interpretation data, each interpretation data is associated with an interpretation related to a type of sampling plan, and each interpretation data includes a static portion and an adjustable portion;
wherein the processor is further configured to:
send the selection to a definition module of the device;
send the selection to a report generation module of the device;
the definition module is configured to:
retrieve definition data from a memory, wherein the definition data includes definitions of a set of variables associated with the selected type of sampling plan;
send the definition data to the interface module;
the sampling module is further configured to send the determined sample size data to the report generation module;
the report generation module is configured to:
retrieve interpretation data from a memory, wherein the interpretation data is associated with an interpretation related to the selected type of sampling plan, and the interpretation data includes a static portion and an adjustable portion;
populate the adjustable portion of the interpretation data with the sample size data to generate adjusted interpretation data;
combine the adjusted interpretation data with the definition data to generate a report;
send the report to the interface module; and
the interface module is further configured to output the report on the user interface, wherein the report includes the definition data and the adjusted interpretation data indicating the determined sample size.

16. The system of claim 15, wherein the report generation module is further configured to bound the adjusted interpretation data and the definition data within an output size threshold to generate the report, and wherein the report includes the definition data and the adjusted interpretation data within a set of boundaries defined by the output size threshold.

17. A computer program product for determining a sample size for a sampling system, the computer program product comprising a computer readable storage medium having program instructions embodied therewith, the program instructions executable by a device to cause the device to:
receive a selection indicating a type of sampling plan;
retrieve interface data associated with the selected type of sampling plan, wherein the interface data, when rendered by the device, is outputted as a user interface;
output the user interface on a display of the device, wherein the user interface includes one or more options associated with the selected type of sampling plan;
receive a set of input values of the one or more options through the user interface; and
determine sample size data based on the set of input values, wherein the sample size data indicates an optimal number of samples to be used in the selected sampling plan.

18. The computer program product of claim 17, wherein the selected type of sampling plan is selected from a group including variable acceptance sampling, and binary acceptance sampling.

19. The computer program product of claim 17, wherein the selected type of sampling plan is selected from a group including dual group comparison sampling, and reliability sampling.

20. The computer program product of claim 18 or claim 19, wherein the sampling plan is implemented on at least one mobile device.

21. The computer program product of claim 17, wherein the program instructions are further executable by the device to cause the device to:
retrieve definition data from a memory, wherein the definition data includes definitions of a set of variables associated with the selected type of sampling plan;
retrieve interpretation data from the memory, wherein the interpretation data is associated with an interpretation related to the selected type of sampling plan, and the interpretation data includes a static portion and an adjustable portion;
populate the adjustable portion of the interpretation data with the sample size data to generate adjusted interpretation data;
combine the adjusted interpretation data with the definition data to generate a report;
output the report on the user interface, wherein the report includes the definition data and the adjusted interpretation data indicating the determined sample size, and the report includes the definition data and the adjusted interpretation data within a set of boundaries defined by an output size threshold.
